(19) Europäisches Patentamt / European Patent Office / Office européen des brevets

(11) **EP 4 636 687 A1**

(12) **EUROPÄISCHE PATENTANMELDUNG**

(43) Veröffentlichungstag:
**22.10.2025 Patentblatt 2025/43**

(21) Anmeldenummer: **25171164.4**

(22) Anmeldetag: **17.04.2025**

(51) Internationale Patentklassifikation (IPC):
**G06T 7/00** *(2017.01)* **G01N 21/88** *(2006.01)*
**G01N 21/95** *(2006.01)*

(52) Gemeinsame Patentklassifikation (CPC):
**G01N 21/95; G01N 21/8851; G06T 7/0004;**
G06T 2207/20021; G06T 2207/20081;
G06T 2207/20084

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **19.04.2024 DE 102024110992**
**19.04.2024 DE 102024110990**

(71) Anmelder: **ISRA VISION GMBH**
**64293 Darmstadt (DE)**

(72) Erfinder:
• **Hegels, Dr. Daniel**
**44143 Dortmund (DE)**
• **Ajami, Mohamad**
**12169 Berlin (DE)**
• **Al-Raziqi, Ali**
**64347 Griesheim (DE)**
• **Hülsmann, Jens**
**49170 Hagen (DE)**

(74) Vertreter: **WSL Patentanwälte Partnerschaft mbB**
**Kaiser-Friedrich-Ring 98**
**65185 Wiesbaden (DE)**

(54) **VERFAHREN UND VORRICHTUNG ZUR INSPEKTION VON 3-DIMENSIONALEN OBJEKTEN**

(57) Die Erfindung betrifft Verfahren zur Inspektion von 3-dimensionalen Objekten, beispielsweise von Pouch-Zellen (11, 31, 111), sowie eine entsprechende Vorrichtung (1, 101), wobei jedes Objekt ein im Wesentlichen kissenförmiges oder quaderförmiges Gehäuse mit einer Oberseite und einer Unterseite aufweist,
wobei sich die Oberseite des Gehäuses (12, 112) aus mindestens einem oberen Oberflächenabschnitt (13, 113) sowie einer Vielzahl von lateralen Oberflächenabschnitten (17, 18, 21, 22, 23, 24, 117, 118, 121, 122, 123, 124, 125, 126, 127, 128, 129) zusammensetzt, die zu dem mindestens einen oberen Oberflächenabschnitt (13, 113) schräg, parallel oder senkrecht verlaufen oder Eckenabschnitte (125) darstellen,
wobei für jedes Objekt mittels einer Matrixkamera matrixweise erfasste Bildinformationen von an der Oberseite reflektiertem Licht einer Flächen-Beleuchtungsrichtung in einem Ruhezustand des zu inspizierenden Objekts erzeugt und an eine Datenverarbeitungseinrichtung (70) übermittelt werden, wobei die matrixweise erfassten Bildinformationen Licht umfassen, das von den lateralen Oberflächenabschnitten reflektiert wurde, wobei die matrixweise erfassten Bildinformationen als erste Gesamtmatrix mittels der Datenverarbeitungseinrichtung weiter verarbeitet werden, wobei mittels der Datenverarbeitungseinrichtung (70) weiter folgende Schritte durchgeführt werden:
• Segmentierung der ersten Gesamtmatrix
• Feststellen eines Fehlertyps eines erkannten Fehlers und/oder eines Schweregrads eines erkannten Fehlers und/oder Ermitteln einer Qualitäts-Kennzahl, welche eine Beurteilung der Qualität des Objekts erlaubt.

EP 4 636 687 A1

Fig. 10

**Beschreibung**

Die Erfindung betrifft ein Verfahren zur Inspektion von 3-dimensionalen Objekten, insbesondere von sogenannten Pouch-Batteriezellen (im Folgenden kurz Pouch-Zellen) sowie eine entsprechende Vorrichtung.

Pouch-Zellen sind ein Batterietyp, welcher insbesondere für Lithium-Ionen-Batterien verwendet wird. Eine Pouch-Zelle besteht in der Regel aus einem kissenartigen Gehäuse oder Verpackung, welche(s) durch eine mit Kunststoff beschichtete Metallfolie (z.B. Aluminiumfolie) gebildet wird. Daher wird eine derartige Zelle auch als Polymer-Batterie bezeichnet. Das Gehäuse ist als ein flexibler, flacher und leichter, nach außen versiegelter Beutel oder Kissen gestaltet. Im Innern des Gehäuses ist in der Regel ein Stapel übereinander liegender Elektrodenschichten, aktiver Schichten und Separatorschichten angeordnet. Die Anschlüsse sind als zwei Laschen (Tabs, Anschlussfahnen) geformt, die an einer Seite nebeneinander, an angrenzenden oder gegenüber liegenden Seiten von dem kissenartigen Gehäuse vorstehen. Pouch-Zellen sind für ihre hohe Energiedichte, ihr kompaktes Design und Flexibilität bekannt, wodurch sie für verschiedene Anwendungen, einschließlich Elektrofahrzeuge, geeignet sind. Die Pouch-Zellen lassen sich leicht vergrößern oder verkleinern, um den spezifischen Anforderungen verschiedener Elektrofahrzeug-Modelle zu erfüllen. Ihr flaches und flexibles Design ermöglicht auch eine einfachere Integration in verschiedene Bereiche des Fahrzeugs, was eine effizientere Verpackung und verbesserte Raumnutzung bewirkt. Nachteilig am Design der Pouch-Zellen ist, dass sie aufgrund ihres Aufbaus generell empfindlich gegenüber mechanischen Beschädigungen sind. Hierdurch können leicht Gase oder Elektrolyt freigesetzt werden oder es kann zu einem starken Aufblähen der Zellen oder inneren Kurzschlüssen kommen.

Es ist daher wünschenswert, derartige und andere 3-dimensionale Objekte bei der Qualitätskontrolle eingehend zu inspizieren, um beschädigte Objekte frühzeitig zu erkennen.

Es werden bereits verschiedene Möglichkeiten für eine Qualitätskontrolle von flachen Objekten wie Batteriezellen offenbart. Beispielsweise ist aus dem Dokument US 2022/0 390 387 A1 ein Verfahren bekannt, bei dem optische Kohärenztomographie (OCT) verwendet wird, um einen Spalt zwischen einer Bleifolie und einer Anschlusslasche (Tab) einer Pouch-Zelle zu inspizieren. Hierdurch kann eine Aussage über die Qualität des Verschlusses der Pouch-Zelle getroffen werden, welche jedoch eine sehr beschränkte Aussagekraft über die Qualität der Pouch-Zelle hat. In dem Dokument EP 4 117 081 A1 wird ein sehr aufwändiges Inspektionssystem beschrieben, das eine Dickenmesseinheit, eine Einheit zur Messung der elektrischen Eigenschaften, eine Bedruckungseinheit, eine Tab-Schneideeinheit, eine Wägeeinheit, eine Tab-Prüfeinheit und eine Fehlerauswahleinheit aufweist. Die Dickenmesseinheit misst die Dicke der Pouch-Zelle und die Bedruckungseinheit dient zum Aufdrucken von Informationen zu der Pouch-Zelle auf deren Oberfläche. Die Tab-Prüfeinheit bestimmt die Länge und die Form des Tabs mittels Vision-Inspektion. Mittels der Fehlerauswahleinheit werden fehlerhafte Pouch-Zellen in hierfür bereitgestellte Magazine ausgesondert. Das Dokument DE 10 2019 109 703 A1 zeigt und beschreibt eine Anordnung zur Qualitätsprüfung einer Batteriezelle, deren transparente Außenhaut einen Innenraum umschließt. Innerhalb des Innenraums, d.h. unter der Außenhaut, ist ein (zusätzlicher) Glasstift oder ein Lithium-Metallblättchen angeordnet, der/das unter Anwesenheit einer vorbestimmten Fluorwasserstoff-Konzentration das optische Erscheinungsbild in diesem Raum ändert. Entsprechend wird in aufwändiger Weise durch optoelektronische Messung dieser Glasstift oder diese Lithium-Metallblättchen analysiert, um die Fluorwasserstoff-Konzentration und somit die Qualität der Batteriezelle bestimmen zu können. Schließlich ist aus dem Dokument EP 3 869 603 A1 ein Verfahren zur Überprüfung von laminierten Elektroden-Separator-Verbunden und Batterien mit Elektroden-Separator-Verbunden im Hinblick auf deren Qualität anzugeben, das für eine Großserienfertigung geeignet ist und eine Überprüfung der sicheren und zuverlässigen Verbindung der Schichten miteinander gewährleistet. Die Überprüfung beinhaltet ein Erfassen wenigstens eines Teils einer Oberfläche des Elektroden-Separator-Verbunds mittels einer Erfassungsvorrichtung zur Erzeugung eines Messergebnisses und die Auswertung des Messergebnisses. Die Erfassungsvorrichtung ist insbesondere geeignet, die Oberflächentopografie, Oberflächentemperatur und/oder Oberflächenfarbe zu erfassen. Dies kann mittels eines optischen Sensors, eines Fotoapparates und/oder einer Kamera erfolgen. Hierbei kann die Erfassungsvorrichtung mindestens eine Beleuchtungseinheit umfassen, die auf die zu erfassende Oberfläche des Elektroden-Separator-Verbunds Licht abgeben kann. Das Auswerten kann eine Bildbearbeitung und/oder Bildanalyse umfassen.

Aus den Dokumenten WANG, Xu ; CHENG, Pan: "Deep learning-based visual defect inspection system for pouch battery packs", Cognitive computing - ICCC 2022: 6th international conference ; held as part of the services conference federation, SCF 2022 ; Honolulu, HI, USA, December 10-14, 2022 ; proceedings; Cham, Switzerland; Springer, 2022 (Lecture notes in computer science), WO 2023 / 284 712 A1, EP 4 166 935 A1 und DE 10 2021 002 262 B3 sind weitere Verfahren zur Inspektion von Objekten beziehungsweise zur Defektdetektion oder Laschenerkennung bekannt.

Die oben angegebenen, bekannten Verfahren sind entweder vergleichsweise aufwändig oder erlauben lediglich eine sehr beschränkte Aussage über die Qualität eines 3-dimensionalen Objekts, beispielsweise einer Pouch-Zelle. Daher ist es Aufgabe der vorliegenden Erfindung, ein schnelles und aussagekräftiges Verfahren zur Inspektion eines Objekts zu schaffen, das eine umfassende Einschätzung der Qualität dieses Objekts erlaubt. Analog ist es die Aufgabe der Erfindung, eine entsprechende Vorrichtung zur Inspektion anzugeben.

Die obige Aufgabe wird durch das Verfahren zur Inspektion eines flachen Objekts, insbesondere einer Batteriezelle, beispielsweise in Form einer Pouch-Zelle, mit den Merkmalen des Anspruchs 1 sowie eine entsprechende Inspektionsvorrichtung mit den Merkmalen des Anspruchs 12 gelöst.

Insbesondere wird die Aufgabe durch ein Verfahren zur Inspektion von 3-dimensionalen, gegebenenfalls flachen Objekten, beispielsweise von Pouch-Zellen, gelöst, wobei jedes Objekt ein im Wesentlichen kissenförmiges oder quaderförmiges Gehäuse mit einer Oberseite und einer Unterseite aufweist,

wobei sich die Oberseite des Gehäuses aus mindestens einem oberen Oberflächenabschnitt sowie einer Vielzahl von lateralen Oberflächenabschnitten zusammensetzt, die zu dem mindestens einen oberen Oberflächenabschnitt parallel (gegebenenfalls nicht auf gleicher Höhe wie der obere Oberflächenabschnitt), schräg oder senkrecht verlaufen oder Eckenabschnitte darstellen, wobei sich die Unterseite des Gehäuses aus mindestens einem unteren Oberflächenabschnitt sowie einer Vielzahl von lateralen Oberflächenabschnitten zusammensetzt, die zu dem mindestens einen unteren Oberflächenabschnitt parallel (gegebenenfalls nicht auf gleicher Höhe wie der untere Oberflächenabschnitt), schräg oder senkrecht verlaufen oder Eckenabschnitte darstellen, wobei für jedes Objekt mittels einer Matrixkamera matrixweise erfasste Bildinformationen von an der Oberseite reflektiertem Licht einer Flächen-Beleuchtungseinrichtung (gegebenenfalls einschließlich des an der oberen Tab-Oberfläche des ersten Tabs und/oder des zweiten Tabs reflektierten Lichts) in einem Ruhezustand des zu inspizierenden Objekts erzeugt und an die Datenverarbeitungseinrichtung übermittelt werden, wobei die matrixweise erfassten Bildinformationen Licht umfassen, das von den lateralen Oberflächenabschnitten reflektiert wurde, wobei die matrixweise erfassten Bildinformationen als erste Gesamtmatrix mittels der Datenverarbeitungseinrichtung weiter verarbeitet werden, wobei mittels der Datenverarbeitungseinrichtung weiter folgende Schritte durchgeführt werden:

- Segmentierung der ersten Gesamtmatrix

    o in einen ersten Bildinformations-Abschnitt umfassend die Bildinformationen des oberen Oberflächenabschnitts und
    o in mindestens einen zweiten Bildinformations-Abschnitt, wobei jeder zweite Bildinformations-Abschnitt die Bildinformationen mindestens eines vorgegebenen Abschnitts der lateralen Oberflächenabschnitte (beispielsweise ohne einen Eckenabschnitt) und/oder mindestens eines vorgegebenen Eckenabschnitts beinhaltet,

- Zerlegung des ersten Bildinformations-Abschnitts in eine Vielzahl einzelner Patches,
- Feststellen eines Fehlertyps eines erkannten Fehlers und/oder eines Schweregrads eines erkannten Fehlers und/oder Ermitteln einer Qualitäts-Kennzahl, welche eine Beurteilung der Qualität des Objekts erlaubt, basierend auf

    o einer für jeden Patch der Vielzahl der Patches gesonderten Ermittlung, ob der jeweilige Patch des ersten Bildinformations-Abschnitts eine Anomalie oder mehrere Anomalien aufweist, mittels eines entsprechend trainierten ersten NN-Algorithmus, wobei bei Vorhandensein einer Anomalie ein Fehler erkannt wird, und
    o einer Erkennung, ob in dem mindestens einen zweiten Bildinformations-Abschnitt ein Fehler vorliegt, und einer entsprechenden Klassifizierung des jeweiligen zweiten Bildinformations-Abschnitts mittels eines entsprechend trainierten, zweiten NN-Algorithmus, der von dem ersten NN-Algorithmus verschieden ist.

Die Datenverarbeitungseinrichtung kann das Ergebnis der Feststellung oder der Ermittlung an einer vorgegebenen Schnittstelle ausgeben, um es für einen Nutzer zugänglich zu machen. Mit dieser Schnittstelle kann eine Anzeigeeinrichtung verbunden sein, welche das ausgegebene Ergebnis darstellt. Zudem kann die Unterseite des Objekts analog zu dem obigen und den nachfolgend erläuterten Verfahrensschritten inspiziert werden, d.h. ein Fehlertyp eines erkannten Fehlers und/oder eines Schweregrads eines erkannten Fehlers und/oder eine Qualitäts-Kennzahl des Objekts ermittelt werden. Die Unterseite des Gehäuses setzt sich aus mindestens einem unteren Oberflächenabschnitt sowie einer Vielzahl von lateralen Oberflächenabschnitten zusammen, die zu dem mindestens einen unteren Oberflächenabschnitt schräg, parallel oder senkrecht verlaufen oder Eckenabschnitte darstellen.

Das Verfahren dient zur Inspektion von 3-dimensionalen, beispielsweise flachen Objekten in Kissen- oder Quaderform, beispielsweise in der Form von Batteriezellen, z.B. von Pouch-Zellen. In einem Ausführungsbeispiel kann die vorliegende Erfindung für ein flaches Objekt eingesetzt werden, wobei als flaches Objekt ein 3-dimensionales Objekt bezeichnet wird, das in eine Raumrichtung (z.B. die Höhe) eine wesentlich geringere Abmessung aufweist als in die beiden anderen Raumrichtungen und deshalb im Wesentlichen die Form eines flachen Quaders oder eine Kissenform oder eine diesen Formen ähnliche Form aufweist. Alternativ kann die Abmessung in die eine Raumrichtung auch größer sein, so dass das Objekt als im Wesentlichen quaderförmig bezeichnet wird. Hierbei bedeutet "im Wesentlichen", dass die Form des Objekts dem eines Kissens oder eines Quaders angenähert ist. Zum Beispiel kann der Quader stark abgeschrägte Kanten aufweisen. In vielen Fällen weist ein derartiges Objekt zudem einen ersten Anschlusstab (kurz: Tab, z.B. die Anode) und gegebenenfalls mindestens einen zweiten Anschlusstab (kurz: Tab, z.B. die Kathode) auf, die jeweils seitlich abragen. Jedes Objekt weist ein Gehäuse mit einer Oberseite und einer der Oberseite gegenüber liegenden Unterseite auf, wobei gegebenenfalls vorhandene, abragende Tabs zu dem Gehäuse gehören. Das erfindungsgemäße Verfahren kann sowohl zur Inspektion von 3-dimensionalen Objekten, die einen oder mehrere derartige Tabs aufweisen, als auch zur Inspektion von 3-dimensionalen Objekten ohne derartige Tabs verwendet werden. Insbesondere ist das Verfahren für Objekte geeignet, die, insbesondere an ihrem Rand, stufenförmige oder terrassenförmige Abschnitte oder gegebenenfalls die erwähnten Anschlusstabs aufweisen. Das Objekt wird demnach so betrachtet, dass eine der beiden größten Seiten einen Abschnitt der die oben liegende Oberseite und die gegenüber liegende, ebenfalls große Seite einen Abschnitt der unten liegende Unterseite bildet. Wenn die Oberseite oben liegt und die Unterseite unten, dann besitzt die Oberseite des Gehäuses mindestens einen, im Wesentlichen horizontal verlaufenden oberen Oberflächenabschnitt, der der Oberflächenabschnitt der Oberseite mit der größten Ausdehnung ist. Es können weitere, horizontal verlaufende Oberflächenabschnitte, die parallel zu dem oberen Oberflächenabschnitt der Oberseite verlaufen, beispielsweise ein Terrassen-Oberflächenabschnitt der Oberseite, vorgesehen sein. Die Oberseite weist weiter eine Vielzahl von lateralen Oberflächenabschnitten auf, die zu dem mindestens einen oberen Oberflächenabschnitt schräg, parallel oder senkrecht verlaufen (z.B. Kanten oder Seitenflächen) oder Eckenabschnitte darstellen. Die lateralen Oberflächenabschnitte umfassen auch die zum oberen Oberflächenabschnitt parallel verlaufenden Abschnitte oder eine Oberfläche eines abragenden Tabs (Tab-Oberfläche). Entsprechend weist die Unterseite des Gehäuses mindestens einen im Wesentlichen horizontal verlaufenden unteren Oberflächenabschnitt, der der Oberflächenabschnitt mit der größten Ausdehnung ist, auf. Es können weitere horizontal verlaufende Oberflächenabschnitte, die parallel zu dem "oberen" Oberflächenabschnitt der Unterseite verlaufen, beispielsweise ein Terrassen-Oberflächenabschnitt der Unterseite, vorgesehen sein. Die Unterseite weist weiter eine Vielzahl von lateralen Oberflächenabschnitten auf, die zu dem mindestens einen unteren Oberflächenabschnitt schräg, parallel oder senkrecht verlaufen (z.B. Kanten oder Seitenflächen) oder Eckenabschnitte darstellen. Der erste Tab und der gegebenenfalls vorhandene, mindestens eine zweite Tab können beispielsweise von einer kurzen Seite und/oder einer langen Seite abragen und weisen jeweils eine obere Tab-Oberfläche und eine untere Tab-Oberfläche auf. Beispielsweise ragen der erste Tab und der zweite Tab von einer einzigen kurzen oder langen Seite ab. Sie sind in diesem Fall nebeneinander angeordnet. Alternativ können der erste Tab und der zweite Tab von gegenüber liegenden kurzen oder langen Seiten abragen. Das Gehäuse kann in der Draufsicht auf die Oberseite oder Unterseite des Gehäuses eine im Wesentlichen rechteckige Form haben (ohne Berücksichtigung von eventuell vorhandenen Tabs). Die kurze Seite ist die kurze Seite dieses Rechtecks und die lange Seite stellt die lange Seite dieses Rechtecks dar.

Um die Bildinformationen von den zu inspizierenden 3-dimensionalen Objekten zu gewinnen, werden die 3-dimensionalen Objekte in einer Vorrichtung, welche zum Durchführen des Verfahrens dient, bewegt, wobei ein zeitweise eingenommener Ruhezustand, in dem das 3-dimensionale Objekt in der Vorrichtung nicht bewegt wird, hierin eingeschlossen ist. Die Bewegung der 3-dimensionalen Objekte erfolgt mittels einer Bewegungseinrichtung, welche die relative Bewegung der zu inspizierenden Objekte zu der Linien-Beleuchtungseinrichtung in einer vorgegebenen Geschwindigkeit (Bewegungszustand), zum Beispiel im Wesentlichen parallel zum oberen Oberflächenabschnitt, beispielsweise in Richtung der größten Ausdehnung des oberen Oberflächenabschnitts (Länge) oder quer dazu bewirkt. Die vorgegebene Geschwindigkeit beträgt beispielsweise mindestens 500 mm/s, z.B. mindestens 800 mm/s. Weiter ist die Bewegungseinrichtung derart eingerichtet, dass sie bei der weiteren Bewegung des jeweiligen Objekts die Anordnung des Objekts in Ruhe an einer vorgegebenen Position und über einen vorgegebenen Zeitraum in Bezug auf eine Flächen-Beleuchtungseinrichtung bewirkt (Ruhezustand). Hierbei kann der vorgeebene Zeitraum der Anordnung des Objekts in dem Ruhezustand zeitlich vor dem Bewegungszustand oder nach dem Bewegungszustand liegen. Der vorgegebene Zeitraum in dem Ruhezustand kann beispielsweise mindestens 300 ms, z.B. mindestens 400 ms betragen. In einem Ausführungsbeispiel wird die Bewegungseinrichtung durch einen Schlitten realisiert, welcher auf einer Lineareinheit in vorgegebener Weise bewegbar ist. Der Schlitten weist beispielsweise Saugnäpfe auf, mittels der das Gehäuse des Objekts an seiner Unterseite an dem Schlitten befestigbar ist. Die Bewegungsinformationen zur Bewegung des zu inspizierenden 3-dimensionalen Objekts (d.h. seine Anordnung im Bewegungszustand und im Ruhezustand, den Ort des Objekts und/oder seine Geschwindigkeit) werden mittels einer Bewegungserfassungseinrichtung erfasst und an die Datenverarbeitungseinrichtung übermittelt. Dort werden die erfassten Bewegungsinformationen (Bewegungsdaten) zusammen mit den erfassten Bildinformationen der Matrixkamera zur Feststellung des Vorhandenseins von Fehlern und/oder der Ermittlung der Qualitäts-Kennzahl herangezogen.

Die Flächen-Beleuchtungseinrichtung beleuchtet die Oberseite (beispielsweise die gesamte Oberseite) des Gehäuses gegebenenfalls einschließlich der oberen Tab-Oberfläche des ersten Tabs und/oder des zweiten Tabs des zu inspizierenden Objekts von oben. In einem Ausführunqsbeispiel kann die gesamte Oberseite des Gehäuses (qeqebenenfalls einschließlich der oberen Tab-Oberfläche des ersten Tabs und/oder des zweiten Tabs) oder zumindest ein großer Abschnitt der Oberseite des Gehäuses (qeqebenenfalls einschließlich der oberen Tab-Oberfläche des ersten Tabs und/oder des zweiten Tabs), beispielsweise mindestens 70 %, z.B. mindestens 80 %, der gesamten Oberseite des Gehäuses mittels der Flächen-Beleuchtungseinrichtung beleuchtet werden. Beispielsweise trifft das Licht der Flächen-Beleuchtungseinrichtung senkrecht oder schräg, z.B. unter einem Einfallswinkel im Bereich von 10 ° bis 60 ° in Bezug auf die horizontale Richtung auf die Oberseite des Gehäuses gegebenenfalls einschließlich der oberen Tab-Oberfläche des ersten Tabs und/oder des zweiten Tabs auf. Mittels der schrägen Beleuchtung durch die Flächen-Beleuchtungseinrichtung können Fehler wie Einkerbungen, Vorsprünge, Kratzer, Faltdefekte, Kantenrisse, Fehler an der Versiegelung und dergleichen topologische Defekte einfach erkannt werden. Fehler in der Form von absorbierenden Defekten (z.B. Kontamination, Fremdkörper an der Oberfläche) können ebenfalls erkannt werden. Die Flächen-Beleuchtungseinrichtung wird durch LED-Spots oder andere Quasi-Punktstrahler realisiert. In einem Ausführungsbeispiel ist oberhalb der Position des zu inspizierenden Objekts im Ruhezustand mindestens ein zweiter Umlenkspiegel angeordnet, der senkrecht zur horizontalen Richtung verläuft und das Licht der Flächen-Beleuchtungseinrichtung so umlenkt, dass es von schräg oben auf die Oberseite des taschenförmigen Gehäuses (gegebenenfalls mit Tabs) fällt. Hierdurch können die Außenmaße der Inspektionsvorrichtung insgesamt kleiner gestaltet werden.

Eine Matrixkamera erfasst das reflektierte Licht der schräg von oben beleuchteten Oberseite des Gehäuses gegebenenfalls einschließlich der oberen Tab-Oberfläche eines im Ruhezustand angeordneten zu inspizierenden Objekts matrixweise in Form von Bildinformationen (Intensität und in einem Ausführungsbespiel zusätzlich ein Farbwert) und übermittelt diese erfassten Bildinformationen (Bilddaten) an die Datenverarbeitungseinrichtung. In einem Ausführungsbeispiel kann die Matrixkamera die gesamte Oberseite des Gehäuses erfassen. Die Matrixkamera ist beispielsweise oberhalb des Objekts angeordnet, wenn sich das Objekt an der vorgegebenen Position in ihrem Ruhezustand befindet, d.h. die Matrixkamera ist in diesem Ausführungsbeispiel oberhalb der Ruhezustands-Position des zu inspizierenden Objekts angeordnet.

Die Matrixkamera kann beispielsweise als CCD- oder CMOS-Kamera ausgeführt sein. Die Matrixkamera erfasst in dem Sichtbereich die Lichtintensität einer Vielzahl von Bildpunkten, die in Reihen und Spalten, d.h. in einer Matrix, angeordnet sind. Hierfür weist die Matrixkamera für jeden Bildpunkt ein lichtempfindliches Element (z.B. ein CCD- oder CMOS-Sensor) auf. Die Größe des von jedem lichtempfindlichen Element aufgenommenen Bereichs bestimmt die Auflösung der Matrixkamera. Die Matrixkamera kann beispielsweise einen Sichtbereich von 9344 X 7000 Pixeln oder 8192 X 8192 Pixeln aufweisen und hiermit beispielsweise innerhalb des Sichtbereichs matrixweise eine Bildinformation einer Größe von 805 X 603 mm erfassen. Die zeilenweise Erfassung kann entsprechend beispielsweise einen Bereich von 16 bis 128 X 1000 bis 8192 Pixel umfassen. Die Matrixkamera ist ferner derart angeordnet, dass sie senkrecht von oben auf das zu inspizierende Objekt in dem Ruhezustand schaut, so dass sie diesem Abschnitt des Sichtbereichs scharf sieht. Hierbei ist die Matrixkamera derart fokussiert, dass eine möglichst gleichmäßige Schärfe über den gesamten Sichtbereich aufweist. Insbesondere ist wird dies für eine Sichtlinie realisiert, bei der die Bildinformationen von dem Objekt (zum Beispiel von den lateralen Oberflächenabschnitten) über Spiegel in die Matrixkamera gelangen. Dies wird durch eine entsprechende Blendeneinstellung bewirkt, die eine hierfür notwendige Tiefenschärfe realisiert.

Das erfindungsgemäße Inspektionsverfahren zeichnet sich dadurch aus, dass mittels der Segmentierung der matrixweise erfassten Bildinformationen ("erste Gesamtmatrix der Bildinformationen) verschiedene Elemente der Bildinformationen, die unterschiedliche Anforderungen an die Analyse für die Inspektion stellen, getrennt und mittels unterschiedlicher Methoden analysiert werden. Es werden in vorteilhafter Weise diejenigen Bildinformationen des vergleichsweise ebenen und hinsichtlich seiner Ausdehnung hervorstechenden Bereichs des oberen Oberflächenabschnitts ("erster Bildinformations-Abschnitt") getrennt von denjenigen Bildinformationen eines lateralen Oberflächenabschnitts einschließlich der Eckenabschnitte ("zweiter Bildinformations-Abschnitt"), die eine geringere Ausdehnung aufweisen und größere Unebenheiten erwarten lassen, zunächst separat verarbeitet und analysiert. Bei dem ersten Bildinformations-Abschnitt hat es sich als vorteilhaft hinsichtlich der Rechengeschwindigkeit erwiesen, diesen Abschnitt eine Vielzahl von Patches zu zerlegen und dann mittels des ersten NN-Algorithmus, wie unten genauer beschrieben wird, zu ermitteln, ob in dem jeweiligen Patch eine oder mehrere Anomalien vorliegen. Bei Vorhandensein mindestens einer Anomalie wird ein Fehler erkannt. In dem zweiten Bildinformation-Abschnitt kann auf der Grundlage eines zweiten NN-Algorithmus, der unten genauer erläutert ist, erkannt werden, ob ein Fehler vorliegt. Zudem kann eine Klassifizierung dieses Fehlers durchgeführt werden.

Für die Gesamt-Qualitätsbetrachtung werden die Einzelanalysen zusammengeführt und gemeinsam betrachtet. Insbesondere wird der Fehlertyp eines erkannten Fehlers bestimmt und/oder dessen Schweregrad und/oder für das Objekt eine Qualitäts-Kennzahl ermittelt, welche die Beurteilung der Qualität des Objekts erlaubt. Hierfür werden beispielsweise auch die erkannten Fehlertypen und/oder deren Schweregrad herangezogen. Wie oben beschrieben ist es von Vorteil, dass die mittels Segmentierung gewonnenen jeweiligen Bildinformations-Abschnitte mittels unterschiedlicher Algorithmen, die an mögliche Fehlertypen angepasst sind, analysiert werden. Hierdurch kann auch für die Auswertung der Bilddaten ein Zeitvorteil und ein Genauigkeitsvorteil geschaffen werden. Mit anderen Worten werden mittels der getrennten Analyse der unterschiedlichen Abschnitte schnell aussagekräftige Ergebnisse bei der Inspektion erzielt, da eine an die jeweiligen Besonderheiten des Objekts angepasste Bilddatenverarbeitung durchgeführt wird.

Die Segmentierung wird insbesondere mittels sogenannter Layout-Rezepte durchgeführt. Jedes Layout-Rezept definiert einen vorgegebenen Abschnitt des Objekts hinsichtlich des Sichtbereichs der Matrixkamera/Kamera vor. Da das Objekt sich bei der Bildaufnahme durch die Matrixkamera/Kamera nicht immer exakt in der vorgegebenen Ideallage befindet, sondern um ein paar Pixel verschoben/rotiert sein kann, wird beispielsweise anhand von vorgegebenen Fixpunkten des Objekts eine Positionskorrektur durchgeführt, das heißt eine Registrierung zur erwarteten Position durchgeführt, so dass die erste Gesamtmatrix (oder entsprechend die n ersten Gesamtmatrizen oder die aus der zeilenweise Betrachtung ermittelten zweite Gesamtmatrix) entsprechend an die Ideallage des Objekts angepasst wird. Die genannten Matrizen mit Bildinformationen werden entsprechend rotiert und/oder verschoben. Wenn diese Anpassung erfolgt ist, können die gewünschten Bildinformations-Abschnitte über das vorgegebene Layout-Rezept sicher identifiziert und entsprechend extrahiert werden.

Aus den von der Matrixkamera an die Datenverarbeitungseinrichtung übermittelten Bildinformationen (Bilddaten) wird durch eine entsprechende, unten detaillierter dargestellte Verarbeitung der Daten in der Datenverarbeitungseinrichtung beispielsweise Fehlertypen wie Einschlüsse, Krater (Delle), Vorsprung (Beule), Verschmutzung (Staub, Elektrolyt-Rückstände), Pseudo-Kanten, Orangenhaut, Poren, Rissbildung, Schleifriefen, Stippen, Oberflächenfehler, Blasenbildung, Kratzer, Nassabdruck ermittelt.

In einem Ausführungsbeispiel des Verfahrens erfolgt die Klassifizierung des mindestens einen zweiten Bildinformations-Abschnitts mittels eines Klassifikators mit zwei Zuständen oder eines Klassifikators mit mindestens 3 Zuständen, wobei der Klassifikator mit mindestens 3 Zuständen beispielsweise die Zuordnung verschiedener Fehlertypen erlaubt, während mittels eines Klassifikators mit zwei Zuständen das Vorhandensein oder Nicht-Vorhandensein eines Fehlers beurteilt wird.

In einem Ausführungsbeispiel des Verfahrens werden für jedes Objekt mit einer Kamera, beispielsweise mittels der Matrixkamera, eine Vielzahl von zeilenweise erfassten Bildinformationen von reflektiertem Licht einer Linien-Beleuchtungseinrichtung an linienförmigen Bereichen der Oberseite (gegebenenfalls einschließlich der oberen Tab-Oberfläche des ersten Tabs und/oder des zweiten Tabs) in einem Bewegungszustand des zu inspizierenden Objekts erzeugt und an eine Datenverarbeitungseinrichtung übermittelt, wobei mittels der Datenverarbeitungseinrichtung folgende Schritte durchgeführt werden:

- Zusammensetzen der zeilenweise erfassten Bildinformationen zu einer zweiten Gesamtmatrix umfassend die Bildinformationen der Oberseite des Objekts,
- Feststellen eines Fehlertyps eines erkannten Fehlers und/oder eines Schweregrads eines erkannten Fehlers und/oder Ermitteln einer Qualitäts-Kennzahl, welche eine Beurteilung der Qualität des Objekts erlaubt, zusätzlich basierend auf den Bildinformationen der zweiten Gesamtmatrix.

Das Feststellen des Fehlertyps eines erkannten Fehlers und/oder eines Schweregrads eines erkannten Fehlers und/oder das Ermitteln einer Qualitäts-Kennzahl, welche eine Beurteilung der Qualität des Objekts erlaubt, basierend auf den Bildinformationen der zusammengesetzten zweiten Gesamtmatrix kann in einem Ausführungsbeispiel auch anstelle der oben erläuterten Feststellung basierend auf der für jeden Patch der Vielzahl der Patches gesonderten Ermittlung, ob der jeweilige Patch des ersten Bildinformations-Abschnitts eine Anomalie oder mehrere Anomalien aufweist, mittels eines entsprechend trainierten ersten NN-Algorithmus, und in Kombination mit der oben erläuterten Erkennung, ob in dem mindestens einen zweiten Bildinformations-Abschnitt ein Fehler vorliegt, und einer entsprechenden Klassifizierung des jeweiligen zweiten Bildinformations-Abschnitts mittels eines entsprechend trainierten, zweiten NN-Algorithmus, erfolgen. Alternativ kann das Feststellen des Fehlertyps eines erkannten Fehlers und/oder eines Schweregrads eines erkannten Fehlers und/oder das Ermitteln einer Qualitäts-Kennzahl, welche eine Beurteilung der Qualität des Objekts erlaubt, basierend auf den Bildinformationen der zusammengesetzten zweiten Gesamtmatrix in einem Ausführungsbeispiel auch anstelle der oben erläuterten Erkennung, ob in dem mindestens einen zweiten Bildinformations-Abschnitt ein Fehler vorliegt, und einer entsprechenden Klassifizierung des jeweiligen zweiten Bildinformations-Abschnitts mittels eines entsprechend trainierten, zweiten NN-Algorithmus, und in Kombination mit der oben erläuterten Feststellung basierend auf der für jeden Patch der Vielzahl der Patches gesonderten Ermittlung, ob der jeweilige Patch des ersten Bildinformations-Abschnitts eine Anomalie oder mehrere Anomalien aufweist, mittels eines entsprechend trainierten ersten NN-Algorithmus, erfolgen.

Bei dem Zusammensetzen der zeilenweise erfassten Bildinformationen des Objekts werden die aufgenommenen "Bildzeilen" zu einem Matrixbild (zweite Gesamtmatrix) zusammengesetzt. Das Zusammensetzen umfasst hierbei das positionsgerechte Nebeneinandersetzen der zeilenweise erfassten Bildinformationen des Objekts, so dass eine Matrix von Bildinformationen (zweite Gesamtmatrix) entsteht, wobei gegebenenfalls Unstimmigkeiten/Überlappungen korrigiert werden. Mit anderen Worten enthält die zweite Gesamtmatrix die einzeln zeilenweise ermittelten Bildinformationen für die gesamte Oberseite des Objekts oder für einen vorgegebenen Abschnitt dieser Oberseite entsprechend der Position, an der das auftreffende Licht der Linien-Beleuchtungseinrichtung an der Oberseite des Objekts reflektiert wurde, und beinhaltet somit ebenfalls ein Bild der Oberseite des Objekts. Hierbei kann das Bild der zweiten Gesamtmatrix entzerrt werden, so dass das resultierende Bild gleich gelagert mit der ersten Gesamtmatrix oder einer der n ersten Gesamtmatrizen ist, z.B. in Bezug auf die Größe der Matrix und/oder die Position des abgebildeten Teils der Oberseite des Objekts. Die zweite Gesamtmatrix wird für die unten beschriebene weitere Analyse der Bilddaten verwendet.

Die Linien-Beleuchtungseinrichtung beleuchtet einen linienförmigen Bereich der Oberseite des Gehäuses (gegebenenfalls einschließlich der oberen Tab-Oberfläche des ersten Tabs und/oder des zweiten Tabs). Beispielsweise wird die Linien-Beleuchtungseinrichtung durch eine Leuchte mit einer Vielzahl von LEDs gebildet, die so angeordnet sind, dass sie einen gewünschten linienförmigen Bereich beleuchten. Hierbei können eine LED-Zeile oder für einen breiteren linienförmigen Bereich mehrere, nebeneinander liegende LED-Zeilen (z.B. 2 bis 10 LED-Zeilen) vorgesehen sein. In einem Ausführungsbeispiel wird die Linien-Beleuchtungseinrichtung derart geschaltet, dass sie jeden Punkt des linienförmigen Bereichs mit Licht in zwei verschiedenen Intensitäten (d.h. mit hoher Intensität A und mit niedriger Intensität B) beleuchtet. Entsprechend erfolgt die zeilenweise Erfassung des von dem linienförmigen Bereich der Oberseite (gegebenenfalls der oberen Tab-Oberfläche des ersten Tabs und/oder des zweiten Tabs) reflektierten Lichts mit einem angepassten Schaltrhythmus in Form ABABAB... (d.h. die zwei verschiedenen Intensitäten A, B werden im Wechsel geschaltet. Die zeilenweise Erfassung der Bildinformationen (Frequenz der Erfassung und der Zeitpunkt der Erfassung) und die Vorschubgeschwindigkeit der Bewegungseinrichtung sind hierzu synchronisiert. Diese Beleuchtung wird auch als HDR-Reflection-Bright-Field Beleuchtung bezeichnet und besitzt aufgrund der besonderen Beleuchtungstechnik Vorteile im Hinblick auf die Erkennung bestimmte Fehlertypen, beispielsweise die Verschmutzung des Objekts mittels einer transparenten Substanz. Die zeilenweise Erfassung der Bildinformationen kann hierbei durch eine Kamera mit entsprechendem Erfassungsbereich und Auflösung, beispielsweise ebenfalls durch die Matrixkamera erfolgen, welche auch die matrixweise Erfassung der Bildinformationen durchführt. Nach der Erfassung durch die Matrixkamera werden die Daten (Bildinformationen) an die Datenverarbeitungseinrichtung übermittelt und zusätzlich zur Inspektion des 3-dimensionalen Objekts herangezogen, wobei vor der Analyse, wie oben beschrieben, die zeilenweise erfassten Bildinformationen zu einem Gesamtbild (zweite Gesamtmatrix) der jeweiligen Oberseite des Objekts zusammengesetzt werden.

Es soll hervorgehoben werden, dass in einem Ausführungsbeispiel mittels einer einzigen Matrix-kamera das reflektierte Licht des linienförmig beleuchteten Bereichs der Oberseite des Gehäuses des zu inspizierenden Objekts in dem Bewegungszustand zeilenweise in der Form von Bildinformationen (Bilddaten, z.B. Intensität und in einem Ausführungsbeispiel zusätzlich ein Farbwert) und das reflektierte Licht der von oben beleuchteten Oberseite des Gehäuses (gegebenenfalls einschließlich der oberen Tab-Oberfläche) eines im Ruhezustand angeordneten zu inspizierenden Objekts matrixweise in Form von Bildinformationen (Bilddaten, z.B. Intensität und in einem Ausführungsbeispiel zusätzlich ein Farbwert) erfasst werden und diese erfassten Bildinformationen an die Datenverarbeitungseinrichtung übermittelt werden. Die zeilenweise Erfassung stellt einen Teilbereich des Sichtbereichs der Matrixkamera dar und ergibt hierbei eine Pixelzeile oder mehrere nebeneinander liegende Pixelzeilen (beispielsweise 16 bis 128 Pixelzeilen) mit Bildinformationen, während aus der matrixweisen Erfassung eine Pixelmatrix mit Bildinformationen resultiert, wobei die Pixelmatrix ebenfalls ein Teilbereich des Sichtbereichs darstellt. In einem Ausführungsbeispiel können die Bildinformationen in einem vorgegebenen Wellenlängenbereich ermittelt werden. Der Sichtbereich der Matrixkamera ist so gestaltet, dass matrix- und zeilenweise erfassten Bildinformationen mittels einer einzigen feststehenden (d.h. sich während der Erfassung der Bildinformation nicht bewegenden) Matrixkamera erfasst werden können, die anschließend von der Datenverarbeitungseinrichtung dem jeweiligen Objekt zugeordnet werden. Hierbei kann bei der matrixweisen Erfassung die gesamte Oberseite des Gehäuses (gegebenenfalls einschließlich der oberen Tab-Oberfläche des ersten Tabs und/oder des zweiten Tabs) oder zumindest der mit der Flächen-Beleuchtungseinrichtung beleuchtete Abschnitt der Oberseite des Gehäuses erfasst werden, d.h. zumindest ein großer Abschnitt der Oberseite des Gehäuses (gegebenenfalls einschließlich der oberen Tab-Oberfläche des ersten Tabs und/oder des zweiten Tabs), beispielsweise mindestens 70 %, z.B. mindestens 80 %, der gesamten Oberseite des Gehäuses des zu inspizierenden Objekts. Die Verwendung der Matrixkamera für die matrixweise und zeilenweise Erfassung der Bildinformationen hat den Vorteil, dass die erhaltenen Bilddaten hinsichtlich des Erfassungsinstruments nicht abgeglichen werden müssen. Sie beinhalten die gleichen Kameraeigenschaften. Die Einbeziehung der zeilenweise ermittelten Bildinformationen in die Inspektion bewirkt eine weitere Verbesserung der Qualitätsbeurteilung.

In einem Ausführungsbeispiel des Verfahrens werden mittels der Datenverarbeitungseinrichtung weiter folgende Schritte im Hinblick auf die obige Analyse der Bildinformationen der zweiten Gesamtmatrix durchgeführt:

- Segmentierung der zweiten Gesamtmatrix

    o in einen dritten Bildinformations-Abschnitt umfassend die Bildinformationen des oberen Oberflächenabschnitts und/oder
    o in mindestens einen vierten Bildinformations-Abschnitt, wobei jeder vierte Bildinformations-Abschnitt die Bildinformationen mindestens eines vorgegebenen Abschnitts der lateralen Oberflächenabschnitte (wobei hierbei Eckenabschnitte ausgenommen werden können) und/oder mindestens eines vorgegebenen Eckenabschnitts beinhaltet,

- Zerlegung des dritten Bildinformations-Abschnitts in eine Vielzahl einzelner Patches,
- wobei das Feststellen eines Fehlertyps eines erkannten Fehlers und/oder eines Schweregrads eines erkannten Fehlers und/oder das Ermitteln einer Qualitäts-Kennzahl, welche eine Beurteilung der Qualität des Objekts erlaubt, basierend auf

o einer für jeden Patch der Vielzahl der Patches gesonderten Ermittlung, ob der jeweilige Patch des dritten Bildinformations-Abschnitts eine Anomalie oder mehrere Anomalien aufweist, mittels des ersten NN-Algorithmus, wobei bei Vorhandensein einer Anomalie ein Fehler erkannt wird, und/oder

o einer Erkennung erfolgt, ob in dem mindestens einen vierten Bildinformations-Abschnitt ein Fehler vorliegt, und einer entsprechenden Klassifizierung des jeweiligen vierten Bildinformations-Abschnitts mittels des zweiten NN-Algorithmus.

Die zeilenweise zusammengesetzten und zuvor zeilenweise erfassten Bildinformationen können in dem oben definierten dritten Bildinformations-Abschnitt analog zu den matrixweise ermittelten Bildinformationen mittels des ersten NN-Algorithmus nach der Zerlegung in eine Vielzahl einzelner Patches und/oder in dem vierten Bildinformations-Abschnitt mittels des zweiten NN-Algorithmus im Hinblick auf das Vorhandensein eines Fehlers untersucht werden. Auch für die zeilenweise erfassten Bildinformationen ist diese Methode anwendbar und besitzt die oben angegebenen Vorteile.

In einem Ausführungsbeispiel des Verfahrens entstehen für jedes Objekt mindestens n (n ≥ 2) Aufnahmen (Erfassungen durch die Matrixkamera) der Oberseite (gegebenenfalls der gesamten Oberseite, gegebenenfalls einschließlich der oberen Tab-Oberfläche) von matrixweise erfassten Bildinformationen durch die zeitlich nacheinander erfolgende Erfassung von reflektiertem Licht, das aus einer Beleuchtungssequenz der gesamten Oberseite des Gehäuses des zu inspizierenden Objekts in dem Ruhezustand (gegebenenfalls einschließlich der oberen Tab-Oberfläche des ersten Tabs und des zweiten Tabs des zu inspizierenden Objekts) aus n verschiedenen Richtungen von schräg oben mittels der Flächen-Beleuchtungseinrichtung erzeugt wird. Die n Aufnahmen werden an die Datenverarbeitungseinrichtung übermittelt. Entsprechend ist in diesem Ausführungsbeispiel die Flächen-Beleuchtungseinrichtung zur Beleuchtung der Oberseite, z.B. der gesamten Oberseite, des Gehäuses des zu inspizierenden Objekts in dem Ruhezustand (gegebenenfalls einschließlich der oberen Tab-Oberfläche des ersten Tabs und/oder des zweiten Tabs des zu inspizierenden Objekts) zeitlich nacheinander aus mindestens n verschiedenen Richtungen von schräg oben und die Matrixkamera entsprechend für die zeitlich nacheinander erfolgende matrixweise Erfassung der Bildinformationen des von der Oberseite des Gehäuses des Objekts reflektierten Lichts, das durch die Beleuchtung aus den mindestens n Richtungen der Flächen-Beleuchtungseinrichtung erzeugt wird, eingerichtet. Die Datenverarbeitungseinrichtung ist entsprechend zum Empfangen und zur Verarbeitung der n matrixweise erfassten Bildinformationen bei der Beleuchtung aus den n Richtungen der Flächen-Beleuchtungseinrichtung eingerichtet, wobei diese Bildinformationen dem jeweiligen Objekt zugeordnet wird. Die in der Form von n Aufnahmen matrixweise erfassten Bildinformationen werden als n erste Gesamtmatrizen mittels der Datenverarbeitungseinrichtung weiterverarbeitet.

In einem Ausführungsbeispiel des erfindungsgemäßen Verfahrens können mittels der Datenverarbeitungseinrichtung weiter folgende Schritte durchgeführt werden:

- Segmentierung der n ersten Gesamtmatrizen

    o in n fünfte Bildinformations-Abschnitte umfassend die Bildinformationen des oberen Oberflächenabschnitts jeder der n ersten Gesamtmatrizen und/oder

    o in n sechste und gegebenenfalls weitere Bildinformations-Abschnitte jeder der n ersten Gesamtmatrizen, wobei jeder sechste und gegebenenfalls weiterer Bildinformations-Abschnitt die Bildinformationen mindestens eines vorgegebenen Abschnitts der lateralen Oberflächenabschnitte und/oder mindestens eines vorgegebenen Eckenabschnitts beinhaltet,

- Ermitteln jeweils eines Maximalbilds und/oder eines Absorptionsbilds und/oder eines Topologiebilds aus den Bildinformationen des fünften Bildinformations-Abschnitts und/oder des sechstens Bildinformations-Abschnitts und/oder der gegebenfalls weiteren Bildinformations-Abschnitte,
- Ermitteln von Fehlern sowie Analysieren und Charakterisieren von Fehlem in dem Maximalbild und/oder in dem Absorptionsbild und/oder in dem Topologiebild des fünften Bildinformations-Abschnitts und/oder des sechsten Bildinformations-Abschnitts und/oder gegebenenfalls der weiteren Bildinformations-Abschnitte und/oder des dritten Bildinformations-Abschnitts und/oder des mindestens einen vierten Bildinformations-Abschnitts,
- wobei das Feststellen eines Fehlertyps eines erkannten Fehlers und/oder eines Schweregrads eines erkannten Fehlers und/oder das Ermitteln einer Qualitäts-Kennzahl, welche eine Beurteilung der Qualität des Objekts erlaubt, auf dem Ergebnis der Analyse und/oder Charakterisierung der jeweils ermittelten Fehler basiert.

Wie unten ausführlicher erläutert wird, kann durch die zusätzliche Fehleranalyse und -Bestimmung mittels Verfahren, in denen keine NN-Algorithmen angewendet werden, eine weitere Beschleunigung der Inspektion erreicht werden, da z.B. die Schwellwert-Analyse der Pixel des Maximalbilds und/oder des Absorptionsbilds und/oder des Topologiebilds sowie die Erstellung des Maximalbilds und/oder des Absorptionsbilds und/oder des Topologiebilds sehr schnell durchführbar ist. Hierfür könen sowohl die matrixweise erzeugten Bildinformationen als auch die zeilenweise erzeugten Bildinformationen herangezogen werden.

In diesem Ausführungsbeispiel des Verfahrens mit n Aufnahmen der matrixweise erfassten Bildinformationen, insbesondere der Bildinformationen des fünften Bildinformations-Abschnitts, des sechsten oder weiteren Bildinformations-Abschnitts, werden die Bildinformationen eines Maximalbilds und/oder eines Topologiebilds und/oder eines Absorptionsbilds als Bildinformationen für die weitere Analyse herangezogen. Das Matrixbild, das Topologiebild und/oder das Absorptionsbild wird jeweils aus den n Aufnahmen zeitlich nacheinander matrixweise erfassten Bildinformationen des jeweiligen Bildinformations-Abschnitts erzeugt. Das Maximalbild repräsentiert jeweils die Bildinformationen der Bereiche, die in Bezug auf die jeweilige Beleuchtungssituation am besten erreichbar sind und damit am hellsten dargestellt werden. Das Topologiebild hat den Vorteil, dass es Topologie-Änderungen im Bild hervorhebt, während das Absorptionsbild Fehler, die auf Absorption von Licht beruhen (z.B. Verschmutzungen auf der Oberfläche), akzentuiert.

Beispielsweise werden die Bildinformationen der n Aufnahmen pixelidentisch erzeugt, d. h., dass die Bildinformationen der mindestens zwei matrixweisen Erfassungen der Oberseite (gegebenenfalls der gesamten Oberseite, gegebenenfalls einschließlich der oberen Tab-Oberfläche des ersten Tabs und/oder des zweiten Tabs) jeweils von den gleichen Orten der Oberflächen erzeugt.

Jede dieser matrixweisen Erfassungen wird als Bildinformations-Matrix M bezeichnet, wobei für jedes Objekt mindestens zwei Bildinformations-Matrizen Mk ($k \geq 2$, k= 2 ... n) erfasst werden. Ein Pixel Pi der erfassten ersten Bildinformations-Matrix M1 entspricht somit dem gleichen Ort auf der Oberfläche der Oberseite (gegebenenfalls einschließlich der oberen Tab-Oberfläche) wie der gleiche Pixel Pi die der erfassten zweiten (dritten, vierten usw.) Bildinformations-Matrix Mk (M2, M3, M4, ...Mn). Die erfasste Lichtintensität in dem Pixel Pi wird als i(Pi) bezeichnet. Die erfasste Lichtintensität der ersten Bildinformations-Matrix M1 an dem Pixel Pi wird als $i_1(Pi)$ bezeichnet. Jede Bild-informations-Matrix Mk beinhaltet beispielsweise die Bildinformationen des oben definierten ersten Bildinformations-Abschnitts.

Das Maximalbild kann ermittelt werden, indem das Maximum der Lichtintensitäten aller Bildinformations-Matrizen Mk in dem jeweiligen Pixel Pi gebildet wird, d. h. Max($i_1(Pi)$, $i_2(Pi)$) für zwei ermittelte Bildinformations-Matrizen M1, M2 für zwei Beleuchtungen aus zwei unterschiedlichen Richtungen oder Max($i_1(Pi)$, $i_2(Pi)$, ... $i_n(Pi)$), wenn n Beleuchtungen aus n unterschiedlichen Richtungen verwendet werden. In einem Ausführungsbeispiel ist n = 4. Das Maximum wird für jeden Pixel Pi berechnet und ergibt - dargestellt in der gesamten Matrix (Maximalmatrix) - das Maximalbild.

Das Topologiebild und das Absorptionsbild können ermittelt werden, indem zunächst auf jede Bildinformations-Matrix Mk jeder Beleuchtungssituation separat zwei unterschiedlich parametrierte Tiefpassfilter (z.B. Box Filter) unabhängig voneinander angewendet und diese voneinander subtrahiert werden:

$$Fk= tiefpass1(Mk) - tiefpass2(Mk)$$

Dabei unterscheiden sich die Parameter der beiden Tiefpassfilter tiefpass1 und tiefpass2 beispielsweise derart, dass der erste Parameter des ersten Tiefpassfilters tiefpass1 kleiner ist als der zweite Parameter des zweiten Tiefpassfilters tiefpass2. Die durch diese Operation jedem Pixels Pi der Matrix Fk zugeordnete Lichtintensität wird als fk(Pi) (k = 2 ... n) bezeichnet. Anschließend wird von den so entstandenen Matrizen Fk analog zu dem obigen Maximalbild durch pixelweise Bestimmung des Minimums bzw. des Maximums über alle Matrizen Fk eine Minimum-Matrix MinM und eine Maximum-Matrix MaxM berechnet, wobei jeder Punkt Pi der Minimum-Matrix MinM berechnet wird als Min(f1(Pi), f2(Pi), ... fn(Pi)) und jeder Punkt Pi der Maximum-Matrix MaxM berechnet wird als Max(f1(Pi), f2(Pi), ... fn(Pi)). Anschließend wird eine Matrix H mit den Werten h(Pi) bestimmt, die sich aus dem - wieder jeweils pixelweise ermittelten - Produkt des an dem jeweiligen Punkt Pi berechneten Minimumwert und Maximumwert mit einem Skalierungsfaktor a (beispielsweise a = 64) bestimmt wird. Das heißt, für jeden Punkt Pi ergibt sich der Wert

$$h(Pi) = Min(f1(Pi), f2(Pi), \ldots fn(Pi)) * Max(f1(Pi), f2(Pi), \ldots fn(Pi)) * a$$

Hieraus wird schließlich eine Matrix Q mit den Werten q(Pi) bestimmt, wobei

$$q(Pi) = sqrt(abs(h(Pi))),$$

wobei abs(q(Pi)) der Betrag (Absolutwert) des Werts q(Pi) ist und sqrt() die Wurzelfunktion darstellt. Hieraus ergeben sich die Werte der Topologiematrix T mit den Werten t(Pi) wie folgt:

$$t(Pi) = q(Pi), \text{ wenn } h(Pi) \leq 0 \text{ oder } t(Pi) = 0, \text{ wenn } h(Pi) > 0 \ .$$

Entsprechend ergeben sich die Werte der Absorptionsmatrix A mit den Werten a(Pi) wie folgt:

$$a(Pi) = q(Pi), \text{ wenn } h(Pi) > 0 \text{ oder } a(Pi) = 0, \text{ wenn } h(Pi) \leq 0 .$$

Die so berechnete Topologiematrix T mit den Werten t(Pi) wird auch als Topologiebild und die Absortionsmatrix A mit den Werten a(Pi) wird auch als Absorptionsbild bezeichnet.

Wenn die matrixweise Erfassung des von der Oberseite (z.B. der gesamten Oberseite und/oder gegebenenfalls einschließlich der oberen Tab-Oberfläche) nach oben reflektierten Lichts der Flächen-Beleuchtungseinrichtung viermal bei einer Beleuchtung aus vier unterschiedlichen Richtungen von schräg oben erfolgt, so werden die Richtungen beispielsweise so gewählt, dass die Beleuchtung von beiden gegenüber liegenden langen Seite und von beiden gegenüber liegenden kurzen Seiten des Gehäuses erfolgt. Alternativ kann die Beleuchtung jeweils aus Richtung der vier Ecken des Gehäuses auf die Oberseite treffen. In einem Ausführungsbeispiel ist es von Vorteil, wenn die Aufnahmen bei Beleuchtungen aus Richtungen erzeugt werden, deren in der Ebene des oberen Oberflächenabschnitts verlaufenden Komponenten insgesamt möglichst einen Winkel von 360 ° abdecken (d.h. bei der Beleuchtung aus vier unterschiedlichen Richtungen erfolgt die Beleuchtung aus jeweils um 90 ° versetzter Richtung oder bei der Beleuchtung aus sechs unterschiedlichen Richtungen erfolgt die Beleuchtung aus jeweils um 60 ° versetzter Richtung usw.).

In diesem Ausführungsbeispiel wird dann jeweils das für den fünften Bildinformations-Abschnitt (z.B. einen oberen Oberflächenabschnitt) und/oder den sechsten Bildinformations-Abschnitt (z.B. vier laterale Oberflächenabschnitte) und gegebenenfalls weiteren Bildinformations-Abschnitt (z.B. vier Eckenabschnitte) erzeugte Maximalbild und/oder Absorptionsbild und/oder Topologiebild und/oder der dritte Bildinformations-Abschnitt und/oder mindestens ein vierter Bildinformationsabschnitt weiter zur Inspektion herangezogen. Beispielsweise werden pixelweise mittels eines oder mehrerer, für das jeweilige Bild (Maximalbild, Absorptionsbild, Topologiebild) und/oder für den dritten Bildinformations-Abschnitt und/oder für den mindestens einen vierten Bildinformations-Abschnitt vorgegebener Schwellwerte Stellen in dem jeweiligen Bild/Abschnitt gesucht, bei denen der jeweilige Wert des jeweiligen Pixels den jeweiligen Schwellwert über- oder unterschreiten. Es wird angenommen, dass, wenn der jeweilige Schwellwert über- oder unterschritten wird, ein Fehler vorliegt. Anschließend werden weitere Eigenschaften dieser Fehler ermittelt, z.B. deren Ausdehnung (in Pixeln), ein Histogramm von Grauwerten im Bereich des Fehlers. Hieraus kann der jeweilige Fehlertyp und/ der Schweregrad des Fehlers bestimmt werden. Analysewerte und die Zuordnung des Fehlertyps kann beispielsweise über entsprechende, in der Datenverarbeitungseinrichtung hinterlegte Tabellen erfolgen.

In einem Ausführungsbeispiel werden durch die Datenverarbeitungseinrichtung aus den segmentierten Bildinformationen beziehungsweise durch die Segmentierung selbst, die mindestens einen zweiten Bildinformations-Abschnitt oder einen vierten Bildinformations-Abschnitt oder einen sechsten oder weiteren Bildinformations-Abschnitt beinhalten, vier Ecken-Bildinformationsmatrizen extrahiert, wobei jede Matrix jeweils eine Ecke des Gehäuses beinhaltet und deren Lage beispielsweise nach der unten beschriebenen Positionskorrektur genau bekannt ist. Alternativ kann ein anderer Bildinformations-Abschnitt des Objekts extrahiert werden. Gegebenenfalls wird vorab eine Maximum-Matrix von mehreren Aufnahmen erzeugt.

Die Ecken-Bildinformationsmatrix jeder Ecke (d.h. jedes Eckenabschnitts) kann beispielsweise separat mittels eines Convolutional Neural Network (CNN)-Algorithmus als zweiten NN-Algorithmus analysiert werden, der einen binären Klassifikator (Klassifikator mit zwei Zuständen, nämlich "intakte Ecke" und "defekte Ecke") beinhaltet. Die Ecken-Bildinformationsmatrix oder alternativ die Bildinformationsmatrix des anderen Bildinformations-Abschnitts kann vergleichsweise klein (beispielsweise 128 x 128 Pixel) definiert werden und zugrunde liegende Bildinformationen stammen lediglich aus dem Bereich der jeweiligen Ecke des Gehäuses. Dieses CNN-Modell wurde speziell für diese Klassifizierungsaufgabe mit wenigen Klassen und für Matrizen mit wenigen Pixeln entwickelt. Dieses CNN-Modell weist eine kompakte Struktur auf, die beispielsweise kompakter ist als herkömmliche tiefe Architekturen. Es besteht beispielsweise aus drei Strängen mit unterschiedlichen Faltungsgrößen, die später zusammengeführt werden. Durch diese Struktur wird die Anzahl der zu trainierenden Parameter reduziert, so dass das Modell weniger Merkmale erlernen kann. Aus diesem Grund ist es ideal für eine binäre oder andere niedrigdimensionale Klassifizierung geeignet. Für das Training und die Evaluierung des CNN-Modells wird ein großer und breiter Datensatz enthaltend Matrizen von Eckenstrukturen und entsprechende, zu erwartende Fehler genutzt. Er wird in Bezug auf das jeweilige, zu untersuchende Objekt zusammengestellt und von Ingenieuren annotiert. Dieser Datensatz enthält Bilder von Ecken der jeweiligen Objekte (d.h. der zu inspizierenden Pouch-Zellen), die in zwei Klassen aufgeteilt sind: "defekt" und "intakt". Die Bilder werden sorgfältig ausgewählt und annotiert, um sicherzustellen, dass sie eine breite Palette von Fehlern und Variationen in den Ecken abdecken. Das Training des Modells wird mit dem Datensatz durchgeführt, wobei die Bilder des Datensatzes in Trainingssatze und Validierungssatze aufgeteilt werden können. Beispielsweise kann ein Verhältnis von 80% für die Trainingsdaten und 20% für die Validierungsdaten verwendet werden. Zudem kann eine fünffache Kreuzvalidierung durchgeführt werden, um sicherzustellen, dass alle Bilder in den Trainingsdaten und in den Validierungsdaten vorkommen. Das Modell besteht aus mehreren Convolutional-Layern, Pooling-Layern und Fully Connected-Layem, die es dem Modell ermöglichen, wichtige Merkmale in den Bildern zu extrahieren und die feinen Unterschiede zwischen defekten und intakten Ecken zu erkennen. Mithilfe der Convolutional-Layer werden die trainierbaren Gewichte der Faltungsoperationen trainiert, die dann dazu dienen, Bildmerkmale zu erkennen. Diese Merkmale werden dann mit den Pooling Layern aggregiert. Anschließend werden die Gewichte der Fully Connected Layer iterativ trainiert, um aus den Merkmalen eine Wahrscheinlichkeit für die zugehörige Klasse zu ermitteln. Zusätzlich können vor der Analyse mit dem CNN-Algorithmus alle Bilder/Abschnitte in der gleichen Größe wie die zu analysierenden Ecken-Bildinformationsmatrizen ausgeschnitten (128x128 Pixel) und derart ausgerichtet werden, dass sie in die gleiche Orientierung gebracht wurden, um eine konsistente Ansicht zu ermöglichen.

In einem weiteren Ausführungsbeispiel wird durch die Datenverarbeitungseinrichtung aus den segmentierten Bildinformationen, die mindestens einen zweiten Bildinformations-Abschnitt und/oder mindestens einen vierten Bildinformations-Abschnitt und/oder einen sechsten oder weiteren Bildinformations-Abschnitt beinhalten, beziehungsweise durch die Segmentierung selbst, mindestens ein vorgegebener Bereich der lateralen Oberflächenabschnitte (z.B. Terrassenabschnitte einer Pouch-Zelle) extrahiert. Jeder vorgegebene Bereich wird mittels eines Objekt-Detektionsnetzwerks analysiert, das auf dem Mask-RCNN-Modell als weiteren zweiten NN-Algorithmus basiert. Der Algorithmus erkennt Fehler einer Vielzahl verschiedener Fehlertypen (beispielsweise 6 verschiedene Fehlertypen wie Vorsprung/-Nase/Vorwölbung, Einkerbung, Falte, Kratzer, Kontamination, Partikel) und ergänzt die Daten des entsprechenden zweiten Bildinformations-Abschnitts im Bereich des Fehlers mit einer entsprechenden Umrandung (Bounding Box). Zum Training des Mask-RCNN-Modells als Algorithmus werden Daten, die einen entsprechenden zweiten Bildinformations-Abschnitt darstellen, verwendet, wobei in diesen Bildinformations-Matrizen die entsprechenden Fehler annotiert und mit einer Bounding-Box versehen sind. Die Architektur des Mask-RCNN-Modells wurde sorgfältig ausgewählt. Dieses Modell stellt eine Weiterentwicklung des Faster R-CNN-Modells dar und ist in der Lage, Bounding Boxes sowie Masken für Fehler in den vorgegebenen Bereichen zu generieren. Selten auftretende Fehlertypen werden zum Training des Modells in künstlich in entsprechende Bildinformations-Abschnitte der vorgegebenen Bereiche eingefügt. Die Leistung des jeweiligen Modells wird anhand eines separatem Validierungsdatensatzes evaluiert. Beispielsweise kann ein Validierungsdatensatz mit einem Verhältnis von 80% für die Trainingsdaten und 20% für die Validierungsdaten verwendet werden. Hierdurch wird sichergestellt, dass das Modell effizient und präzise Fehler erkennt und zutreffend klassifiziert.

In einem weiteren Ausführungsbeispiel wird durch die Datenverarbeitungseinrichtung aus den segmentierten Bildinformationen, die mindestens einen ersten Bildinformations-Abschnitt beinhalten, beziehungsweise durch die Segmentierung selbst, mindestens ein vorgegebener Bereich des oberen Oberflächenabschnitts extrahiert, welcher in einem Ausführungsbeispiel den gesamten oberen Oberflächenabschnitt beinhaltet. Ferner wird die Auflösung in dem vorgegebenen Bereich auf einen vorgegebenen Wert reduziert (z.B. von 5120 x 2216 auf 841 x 265 Pixel), um das Verfahren zu beschleunigen. Das Bild wird in mehrere kleinen Patches (Teilbereiche) unterteilt. Anschließend wird ein vortrainierter CNN-Algorithmus ‚Wide ResNet-50' als ersten NN-Algorithmus verwendet, um jedes Patch dahingehend zu untersuchen, ob in dem jeweiligen Patch eines oder mehrere vorgegebene Features (Merkmale/Fehler/Anomalien) vorhanden sind. Bei "Wide ResNet-50" werden die Schichten des Netzes "breiter" gemacht, indem die Anzahl der Kanäle in den Convolutional Schichten erhöht wird. Dieses CNN ist in der Lage, komplexe Muster und Texturen zu erkennen. Es wurde darüber hinaus beobachtet, dass solche breiteren CNN oft besser generalisieren können, was bedeutet, dass sie neue, unbekannte Daten effektiver verarbeiten können. Das Verfahren wird auch als PaDiM bezeichnet (Patch Distribution Modeling Framework for Anomaly Detection and Localization) und ist ein Algorithmus für die Aufgabe der Anomaliedetektion und -lokalisierung. Dieser Ansatz ist besonders geeignet für die Erkennung von industriellen Fehlem, wo es darum geht, Unregelmäßigkeiten oder Abweichungen von der Norm in visuellen Daten zu identifizieren. PaDiM modelliert die Verteilung der Merkmale eines Bildes. Anschließend werden für jeden Patch die vom CNN extrahierten Features gesammelt. Für jedes Patch wird der Mahalanobis-Abstand zwischen den Merkmalen des Patches und einer Normalverteilung, die aus den Trainingsdaten abgeleitet wurde, berechnet. Dieser Schritt ermittelt, wie 'anormal' oder ungewöhnlich jeder Patch im Vergleich zu normalen Trainingsdaten ist. Der berechnete Mahalanobis-Abstand dient als Anomalie-Score, wobei ein höherer Wert auf eine stärkere Abweichung von der Normalität hinweist. Basierend auf dem Anomalie-Score wird ein Schwellenwert festgelegt. Patches mit einem Score, der diesen Schwellenwert überschreitet, werden als anormal angesehen. Die Lokalisierung von Anomalien erfolgt durch Markierung der Positionen der als anormal eingestuften Patches im Bildinformations-Abschnitt, was die Lokalisierung der Anomalien in dem jeweiligen Bildinformations-Abschnitt ermöglicht.

Der Anomalie-Score wird für jedes Patch separat berechnet, und zwar indem der Mahalanobis-Abstand seiner Merkmale zur erwarteten Normalverteilung berechnet wird, der durch Mittelwert und Kovarianzmatrix aus den Trainingsdaten repräsentiert wird. Ein großer Mahalanobis-Abstand deutet darauf hin, dass die Merkmale des Patches stark von der Normalverteilung abweichen, was auf eine potenzielle Anomalie hinweist. Mathematisch wird der Mahalanobis-Abstand D eines Punktes x zu einer Verteilung mit dem Mittelwert μ und der Kovarianzmatrix Σ wie folgt berechnet:

$$D(x) = \sqrt{(x - \mu)^\top \Sigma^{-1} (x - \mu)}$$

- D(x) ist der Mahalanobis-Abstand für den Punkt
- x ist der Vektor der beobachteten Werte.
- $\mu$ ist der Mittelwertvektor, basierend auf der Trainingsdatenmenge.
- $\Sigma$ ist die Kovarianzmatrix der Trainingsdaten.
- $\Sigma^{-1}$ ist die Inverse der Kovarianzmatrix.
- T bezeichnet die Transposition des Vektors.

Aus dem Anomalie-Score jedes Patches ergibt sich für das jeweilige Patch eine Bewertung des Schweregrads des in dem Patch vorliegenden Fehlers.

Auch aus der Anwendung des zweiten NN-Algorithmus (CNN-Algorithmus, Mask-RCNN-Algorithmus) auf die entsprechenden Bildinformationsabschnitte ergeben sich erkannte Fehler, ein Fehlertyp und für die erkannten Fehler (wobei defekte Ecken eingeschlossen sind) jeweils ein Schweregrad des jeweiligen Fehlers (oder der defekten Ecke). Zudem werden auch, wie oben erläutert wurde, mittels Fehlerermittlung unter Anwendung eines Maximalbilds und/oder eines Absorptionsbilds und/oder eines Topologiebilds und/oder eines Bildinformations-Abschnitts, der auf zeilenweise ermittelten Werten beruht, Fehler in dem jeweiligen Bild/Abschnitt erkannt sowie analysiert und charakterisiert. Hierbei wird auch ein Fehlertyp zugeordnet und der Schweregrad des jeweiligen Fehlers festgestellt. Der jeweilige Schweregrad kann beispielsweise anhand der Größe des jeweiligen Fehlers bewertet werden, wobei einem kleinen Fehler ein Schweregrad einer kleinen Klasse der Schweregrade (z.B. Klasse 1) und einem ausgedehnteren Fehler ein Schweregrad einer größeren Klasse (z.B. Klasse 4) zugeordnet wird. Alternativ oder zusätzlich können weitere Parameter der Fehler zur Bewertung des Schweregrads hinzugezogen werden, z.B. die Lage des Fehlers auf dem Objekt.

Die Größe des Fehlers kann beispielsweise durch die Datenverarbeitungseinrichtung nach Berücksichtigung der Perspektive und/oder der optischen Verzerrung der Matrixkamera ermittelt werden. Analog kann eine Abmessung des Objekts bestimmt werden (z.B. die Kantenlänge des Gehäuses).

Nach Abschluss der Ermittlung der obigen Informationen zu den erkannten Fehlern und deren Schweregrad nimmt die Datenverarbeitungseinrichtung für jedes Objekt eine Gesamtbewertung vor, beispielsweise mittels einer Qualitäts-Kennzahl. Es werden alle erkannten Fehler und deren Schweregrad einbezogen, wobei unterschiedliche Fehler abhängig von deren Schweregrad unterschiedlich gewichtet werden können. Hieraus wird z.B. durch Anwendung einer entsprechenden, in der Datenverarbeitungseinrichtung vorgesehenen Tabelle, ermittelt, ob das Objekt den vorgegebenen Qualitätsanforderungen entspricht oder nicht, d.h. die ermittelte Qualitäts-Kennzahl kleiner als oder größer beziehungsweise gleich eines Qualitäts-Kennzahl-Schwellwerts ist. In beiden Fällen können für die weitere Bearbeitung des Objekts die ermittelten Daten (Fehler, Schweregrad des Fehlers, Größe des Fehlers, Lage/Ort des Fehlers) an einer Schnittstelle der Datenverarbeitungseinrichtung ausgegeben und für die weitere Bearbeitung zur Verfügung gestellt werden.

Für die Aufnahme der Bildinformationen kann in einem Ausführungsbeispiel die Matrixkamera derart eingerichtet sein (z.B. wird derart von der Datenverarbeitungseinrichtung gesteuert), dass die zeilenweise und matrixweise Erfassung der Bildinformationen in einer Erfassungssequenz (zeitliche Abfolge einer Sequenz von Aufnahmen der Matrixkamera über ihr gesamtes Sichtfeld) erfolgt. Diese kann mit einer entsprechenden Steuerung der Beleuchtung (d.h. der Linien-Beleuchtungseinrichtung und/oder der Flächen-Beleuchtungseinrichtung) synchronisiert sein. Hierbei können in einem Ausführungsbeispiel die zeilenweise zu erfassenden Bildinformationen eines ersten zu inspizierenden Objekts (im Bewegungszustand) zumindest teilweise gleichzeitig mit den matrixweise zu erfassenden Bildinformationen einem zweiten zu inspizierenden, von dem ersten Objekt verschiedenen Objekt (im Ruhezustand) aufgenommen werden. Eine derartige Gestaltung der Aufnahmesequenz kann die gesamte, für die Qualitätsbeurteilung des Objekts benötigte Zeit verkürzen. Dies bedeutet, dass die Matrixkamera derart eingerichtet ist, dass zumindest eine ihrer Aufnahmen einer Erfassungssequenz (d.h. in derselben Aufnahme)

- die zeilenweise erfassten Bildinformationen von dem linienförmigen Bereich der Oberseite (gegebenenfalls einschließlich der oberen Tab-Oberfläche des ersten Tabs und/oder des zweiten Tabs) in die Matrixkamera reflektierte Licht der Linien-Beleuchtungseinrichtung in dem Bewegungszustand eines ersten Objekts und
- die matrixweise erfassten Bildinformation von der gesamten Oberseite (gegebenenfalls einschließlich der oberen Tab-Oberfläche des ersten Tabs und/oder des zweiten Tabs) nach oben reflektierte Licht der Flächen-Beleuchtungseinrichtung in dem Ruhezustand eines zweiten Objekts und das von den lateralen Oberflächenabschnitten des zweiten Objekts, wenn anwendbar über die ersten Umlenkspiegel, in die Matrixkamera reflektierte Licht, wobei das zweite Objekt von dem ersten Objekt verschieden ist,

enthält (d.h. in derselben Aufnahme). Erfassungs- und Beleuchtungssequenzen können beispielsweise eine Vielzahl von zeilenweisen Erfassungen des von dem linienförmigen Bereich der Oberseite (gegebenenfalls einschließlich der oberen Tab-Oberfläche des ersten Tabs und/oder des zweiten Tabs) reflektierten Lichts (beispielsweise zwischen 50 und 120 zeilenweise Erfassungen) und, teilweise in derselben Aufnahme, eine von einigen (zwischen 5 und 20) matrixweisen Erfassungen der Oberseite enthalten. Alternativ können die zeilenweise zu erfassenden Bildinformationen und die matrixweise zu erfassenden Bildinformationen von zwei verschiedenen Objekten durch die Matrixkamera in der Erfassungssequenz nacheinander aufgenommen werden. In diesem Fall können, um zeitsparend zu arbeiten, lediglich Abschnitte der gesamten Pixelmatrix der Matrixkamera ausgelesen werden, z.B. den entsprechenden Abschnitt der zeilenweisen Erfassung und den entsprechenden Abschnitt der matrixweisen Erfassung.

Bei der Erfassung der Bildinformationen ruht die Matrixkamera (d.h. sie bewegt sich nicht und auch nicht Teile davon) und die Abmessungen des Sichtbereichs der Matrixkamera sind so gestaltet, dass sowohl die zeilenweise zu erfassenden Bildinformationen als auch die matrixweise zu erfassenden Bildinformationen in dem gleichen Sichtbereich enthalten sind. Das zu inspizierende Objekt befindet sich bei der zeilenweisen Erfassung in einem Bewegungszustand, d.h. das zu inspizierende Objekt bewegt sich während der Erstellung der Bildinformationen weiter. Demgegenüber ist das zu inspizierende Objekt bei der matrixweisen Erfassung in Ruhe an einer vorgegebenen Position und über einen vorgegebenen Zeitraum angeordnet (d.h. im Ruhezustand), so dass eine genaue Ermittlung der matrixweise erfassten Bildinformationen möglich ist. Weiter können neben dem zu inspizierenden Objekt mindestens zwei erste Umlenkspiegel vorgesehen, die ebenfalls von dem Sichtbereich der Matrixkamera erfasst werden und die weitere Bildinformationen von den lateralen Oberflächenabschnitten der Oberseite des zu inspizierenden Objekts liefern. Diese werden in diesem Ausführungsbeispiel zusammen (gleichzeitig, d.h. in derselben Aufnahme) mit der matrixweisen Erfassung des zu inspizierenden Objekts aufgenommen. Die zeilenweise erfassten Bildinformationen und die matrixweise erfassten Bildinformationen, gegebenenfalls einschließlich der über die ersten Umlenkspiegel übermittelten Bildinformationen, werden dem jeweiligen inspizierten Objekt zugeordnet und in die Ermittlung des Vorhandenseins eines Fehlers mindestens eines Fehlertyps und oder einer Qualitäts-Kennzahl einbezogen.

Die Anordnung und die Neigung der ersten Umlenkspiegel ist in dem oben beschriebenen Ausführungsbeispiel derart gestaltet, dass die Matrixkamera das von einem möglichst großen Bereich der jeweiligen lateralen Oberflächenabschnitte der Oberseite reflektierte Licht empfängt. In einem Ausführungsbeispiel der Vorrichtung sind mindestens zwei, insbesondere vier erste Umlenkspiegel vorgesehen, wobei im Ruhezustand des Objekts jeder erste Umlenkspiegel jeweils neben einer Seite des Gehäuses angeordnet ist. Mit vier erste Umlenkspiegeln kann das reflektierte Licht der lateralen Oberflächenabschnitte aller Seiten des Gehäuses aufgenommen werden. Hierbei ist jeder erste Umlenkspiegel beispielsweise derart gestaltet, dass seine Länge (größte Abmessung, Abmessung parallel zu der jeweiligen Seite, neben der der erste Umlenkspiegel angeordnet ist) mindestens der Länge der jeweiligen Seite des Gehäuses entspricht. Weiter ist in einem Ausführungsbeispiel jeder erste Umlenkspiegel in horizontaler Richtung in einem Abstand von mindestens 30 mm von der jeweiligen Seite des Gehäuses angeordnet. In einem weiteren Ausführungsbeispiel beträgt die Breite jedes ersten Umlenkspiegels (Abmessung senkrecht zu der jeweiligen Seite, neben der der jeweilige erste Umlenkspiegel angeordnet ist) mindestens 20 mm. Der Kippwinkel des ersten Umlenkspiegels beträgt beispielsweise mindestens 30° zur horizontalen Richtung. Zudem ist es für die Genauigkeit der Inspektion von Vorteil, wenn die Umlenkspiegel eine sehr gute optische Abbildungsqualität realisieren, um Verzerrungen im Bild der Matrixkamera zu vermeiden.

Der beleuchtete linienförmige Bereich kann sich über die gesamte Länge der Oberseite einschließlich der gegebenenfalls abragenden ersten und zweiten Tabs erstrecken. Hierbei ist die Länge der Oberseite die Abmessung des Gehäuses in Richtung seiner größten Ausdehnung. In diesem Ausführungsbeispiel können mittels des beleuchteten linienförmigen Bereichs Bildinformationen im Hinblick auf die gesamte Oberseite gewonnen werden, wenn das gesamte Objekt an der Linien-Beleuchtungseinrichtung vorbei bewegt wird.

Die Matrixkamera kann derart kalibriert sein, dass durch die Datenverarbeitungseinrichtung Perspektive und/oder optische Verzerrung aus den matrixweise erfassten Bildinformationen berücksichtigbar ist. Für eine derartige Kalibrierung wird beispielsweise das in dem Artikel "Digital camera self-calibration", C.S. Fraser, ISPRS Journal of Photogrammetry & Remote Sensing 52 (1997), Seiten 149-159 beschriebene Verfahren verwendet werden. In einem Ausführungsbeispiel der Vorrichtung ist die Datenverarbeitungseinrichtung derart eingerichtet, dass sie nach Berücksichtigung der Perspektive und der optischen Verzerrung mindestens eine Abmessung des Objekts und/oder mindestens eine Größe eines ermittelten Fehlers ermittelt. Hierfür wird beispielsweise vorab anhand der Kalibrierung eine Look-up Tabelle bestimmt, mittels welcher eine Umrechnung einer Pixelzahl in einen Längen- oder Flächeneinheit erlaubt. Die Look-up Tabelle ist beispielsweise in einer Speichereinheit der Datenverarbeitungseinrichtung gespeichert.

In einem Ausführungsbeispiel kann zudem anhand der Kalibrierung und durch Nutzung von Fixpunkten (beispielsweise die Eckpunkte des Gehäuses) mittels der Datenverarbeitungseinrichtung eine Positionskorrektur durchgeführt werden. Hierbei werden durch softwareseitige "Antastung" des Gehäuses in horizontaler und vertikaler Richtung beispielsweise die Koordinaten der vier Eckpunkte des Gehäuses bestimmt. Die Antastung beinhaltet die Untersuchung der jeweiligen Zeilen und Spalten der Bildinformationen-Matrix auf einen Sprung in der Intensität (große Erhöhung oder Abfall der Intensität von einem Pixel zu dem nächsten Pixel). Die Positionskorrektur ist von Vorteil für einen Vergleich der erfassten Bildinformationen der Matrix mit entsprechenden Sollwerten zur Bestimmung von Fehlern oder die Ermittlung einer Qualitäts-Kennzahl, da das Objekt im Ruhezustand nicht immer exakt an der gleichen Position angeordnet werden kann. Durch die Positionskorrektur kann in einem Ausführungsbeispiel zusätzlich der Ort (Lage, Position) jedes ermittelten Fehlers insbesondere auf der Oberseite (gegebenenfalls einschließlich der oberen Tab-Oberfläche) ermittelt werden. Basierend auf dieser Ortsinformation kann beispielsweise eine der Inspektionsvorrichtung nachgeordnete Markiereinrichtung den Fehler z.B. durch Aufbringen (z.B. Aufsprühen) einer wasserlöslichen Farbe durch Umkreisen auf der Oberfläche des Objekts markieren. Alternativ oder zusätzlich kann durch die Kenntnis des Fehlerorts die Ansteuerung einer Einrichtung zur Fehlerentfernung erleichtert werden.

In das Inspektionsverfahren können durch die Datenverarbeitungseinrichtung in einem Ausführungsbeispiel die Bildinformationen von mindestens einer weiteren Kamera einfließen, die beispielsweise unterhalb der Matrixkamera an dem Gestell befestigt ist. Sie blickt derart von oben auf die Oberseite des Objekts, beispielsweise eine obere Tab-Oberfläche eines Tabs sowie gegebenenfalls auf einen angrenzenden Abschnitt. Die mindestens eine weitere Kamera können beispielsweise Bilder mit einer höheren Auflösung in den angegebenen Abschnitten des Objekts erzeugen. Die aus den entsprechenden Sichtbereichen gewonnenen Bildinformationen werden an die Datenverarbeitungseinrichtung übermittelt und hieraus weitere Informationen hinsichtlich kleinerer Fehler aus diesen Abschnitten erzeugt.

Das Inspektionsverfahren für das Objekt kann auf der Grundlage der erfassten Bildinformationen als ein computerimplementiertes Verfahren, d.h. als ein mit der Datenverarbeitungseinrichtung (Computer) durchgeführtes Verfahren, realisiert werden. Das Verfahren kann auch die Steuerung der Zeilen-Beleuchtungseinheit und/oder der Flächen-Beleuchtungseinheit und/oder der Matrixkamera derart beinhalten, dass eine vorgegebene Erfassungs- und/oder Beleuchtungssequenz realisiert wird. Hierfür sind die Datenverarbeitungseinrichtung und die Zeilen-Beleuchtungseinheit und/oder die Flächenbeleuchtungseinheit miteinander drahtgebunden oder drahtlos verbunden. Die Matrixkamera ist ebenfalls mit der Datenverarbeitungseinrichtung drahtlos oder drahtgebunden verbunden, auch zur Übermittlung der durch die Matrixkamera erfassten Bildinformationen an die Datenverarbeitungseinrichtung.

Die Datenverarbeitungseinheit für die Verarbeitung der Bildinformationen und die Feststellung, ob ein Fehler mindestens eines Fehlertyps vorhanden ist, und/oder die Ermittlung, welche Qualitäts-Kennzahl dem Objekt zugeordnet werden kann, weist einen Prozessor auf, der ein funktionales Modul darstellt, welches Anweisungen/Befehle von Algorithmen interpretiert und ausführt sowie eine Befehlssteuereinheit sowie eine Arithmetikeinheit und eine Logikeinheit aufweist. Der Prozessor kann mindestens einen Mikroprozessor, einen digitalen Signalprozessor (DSP), einen anwendungsspezifischen integrierten Schaltkreis (ASIC), einen Field Programmable Gate Array (FPGA - integrierte Schaltkreis der Digitaltechnik, in den eine logische Schaltung programmiert werden kann), eine diskrete Logikschaltung oder jede Kombination dieser Bausteine aufweisen. Die Datenverarbeitungseinheit kann zudem eine Speichereinheit, ein Eingabemodul (z.B. Tastatur oder Touchpad), ein Energieversorgungsmodul (z.B. Batterie) und ein Anzeigemodul (z.B. Display) aufweisen. Die Datenverarbeitungseinheit kann als reale Hardwareressource, beispielsweise ein Smartphone, Desktop-Computer, Server, Notebook, Cluster/Warehouse Scale Computer, Embedded System oder dergl., oder als virtualisierte Computerressource ausgebildet sein. Weiter kann die Datenverarbeitungseinheit einen Sender/Empfänger (Transceiver) für den Austausch von Daten/Bildinformationen mit einer Anzeigeeinrichtung (Display) aufweisen. Die Datenverarbeitungseinheit weist zudem eine Schnittstelle zum Austausch von Daten mit der Linien-Beleuchtungseinrichtung und/oder der Flächen-Beleuchtungseinrichtung und/oder der Matrixkamera und/oder einer Steuereinrichtung für die Bewegungseinrichtung auf.

Wie oben bereits ausgeführt wurde, kann das oben erläuterte Verfahren z. B. als Computerprogramm oder computerimplementiertes Verfahren realisiert werden, das Anweisungen umfasst, die bei ihrer Ausführung einen Prozessor der Datenverarbeitungseinheit veranlassen, die Schritte des obigen Verfahrens auszuführen, wobei das Computerprogramm eine Kombination der oben beschriebenen Schritte und Datendefinitionen beinhaltet, welche die Computer-Hardware in die Lage versetzen, Rechen- oder Steuerfunktionen auszuführen, und/oder das eine syntaktische Einheit darstellt, die den Regeln einer bestimmten Programmiersprache entspricht und die aus Deklarationen und Anweisungen oder Instruktionen besteht, die für die oben erläuterten Funktionen, Aufgaben oder Problemlösungen benötigt werden.

Weiterhin wird ein Computerprogrammprodukt offenbart, das Anweisungen umfasst, die, wenn sie von dem Prozessor der Datenverarbeitungseinheit ausgeführt werden, die Einrichtung veranlassen, die Schritte eines oder aller oben definierter Verfahren durchzuführen. Entsprechend wird ein computerlesbarer Datenträger offenbart, der ein solches Computerprogrammprodukt speichert. Das Computerprogrammprodukt kann eine Software-Routine sein.

Die obige Aufgabe wird außerdem durch eine Vorrichtung zur Inspektion von 3-dimensionalen Objekten, beispielsweise von Pouch-Zellen, gelöst, wobei jedes Objekt ein im Wesentlichen kissenförmiges oder quaderförmiges Gehäuse mit einer Oberseite und einer Unterseite aufweist, wobei sich die Oberseite des Gehäuses aus mindestens einem oberen Oberflächenabschnitt sowie einer Vielzahl von lateralen Oberflächenabschnitten zusammensetzt, die zu dem mindestens einen oberen Oberflächenabschnitt schräg, parallel oder senkrecht verlaufen oder Eckenabschnitte darstellen,

wobei sich die Unterseite des Gehäuses aus mindestens einem unteren Oberflächenabschnitt sowie einer Vielzahl von lateralen Oberflächenabschnitten zusammensetzt, die zu dem mindestens einen unteren Oberflächenabschnitt schräg, parallel oder senkrecht verlaufen oder Eckenabschnitte darstellen, mit einer Matrixkamera, welche für jedes Objekt matrixweise erfasste Bildinformationen von an der Oberseite reflektiertem Licht einer Flächen-Beleuchtungseinrichtung in einem Ruhezustand des zu inspizierenden Objekts erzeugt und an eine Datenverarbeitungseinrichtung übermittelt, wobei die matrixweise erfassten Bildinformationen Licht umfassen, das von den lateralen Oberflächenabschnitten reflektiert wurde,
wobei die Datenverarbeitungseinrichtung derart eingerichtet ist, dass die matrixweise erfassten Bildinformationen als erste Gesamtmatrix weiter verarbeitet werden und dass sie folgende Schritte durchführt:

- Segmentierung der ersten Gesamtmatrix

  o in einen ersten Bildinformations-Abschnitt umfassend die Bildinformationen des oberen Oberflächenabschnitts und
  o in mindestens einen zweiten Bildinformations-Abschnitt, wobei jeder zweite Bildinformations-Abschnitt die Bildinformationen mindestens eines vorgegebenen Abschnitts der lateralen Oberflächenabschnitte und/oder mindestens eines vorgegebenen Eckenabschnitts beinhaltet,

- Zerlegung des ersten Bildinformations-Abschnitts in eine Vielzahl einzelner Patches,
- Feststellen eines Fehlertyps eines erkannten Fehlers und/oder eines Schweregrads eines erkannten Fehlers und/oder Ermitteln einer Qualitäts-Kennzahl, welche eine Beurteilung der Qualität des Objekts erlaubt, basierend auf

  o einer für jeden Patch der Vielzahl der Patches gesonderten Ermittlung, ob der jeweilige Patch des ersten Bildinformations-Abschnitts eine Anomalie oder mehrere Anomalien aufweist, mittels eines entsprechend trainierten ersten NN-Algorithmus, wobei bei Vorhandensein einer Anomalie ein Fehler erkannt wird, und
  o einer Erkennung, ob in dem mindestens einen zweiten Bildinformations-Abschnitt ein Fehler vorliegt, und einer entsprechenden Klassifizierung des jeweiligen zweiten Bildinformations-Abschnitts mittels eines entsprechend trainierten, zweiten NN-Algorithmus, der von dem ersten NN-Algorithmus verschieden ist.

In einem Ausführungsbeispiel der obigen Vorrichtung ist eine Kamera, beispielsweise die Matrix-kamera, vorgesehen, welche dazu eingerichtet ist, eine Vielzahl von zeilenweise erfassten Bildinformationen von reflektiertem Licht einer Linien-Beleuchtungseinrichtung an linienförmigen Bereichen der Oberseite in einem Bewegungszustand des zu inspizierenden Objekts zu erzeugen und an eine Datenverarbeitungseinrichtung zu übermitteln, wobei die Datenverarbeitungseinrichtung zur Durchführung der folgenden Schritte eingerichtet ist:

- Zusammensetzen der zeilenweise erfassten Bildinformationen zu einer zweiten Gesamtmatrix umfassend die Bildinformationen der Oberseite des Objekts,
- Feststellen eines Fehlertyps eines erkannten Fehlers und/oder eines Schweregrads eines erkannten Fehlers und/oder Ermitteln einer Qualitäts-Kennzahl, welche eine Beurteilung der Qualität des Objekts erlaubt, zusätzlich basierend auf den Bildinformationen der zweiten Gesamtmatrix.

In einem Ausführungsbeispiel der Vorrichtung ist die Datenverarbeitungseinrichtung zur Durchführung der folgenden Schritte eingerichtet:

- Segmentierung der zweiten Gesamtmatrix

  o in einen dritten Bildinformations-Abschnitt umfassend die Bildinformationen des oberen Oberflächenabschnitts und/oder
  o in mindestens einen vierten Bildinformations-Abschnitt, wobei jeder vierte Bildinformations-Abschnitt die Bildinformationen mindestens eines vorgegebenen Abschnitts der lateralen Oberflächenabschnitte und/oder mindestens eines vorgegebenen Eckenabschnitts beinhaltet,

- Zerlegung des dritten Bildinformations-Abschnitts in eine Vielzahl einzelner Patches,
- wobei das Feststellen eines Fehlertyps eines erkannten Fehlers und/oder eines Schweregrads eines erkannten Fehlers und/oder das Ermitteln einer Qualitäts-Kennzahl, welche eine Beurteilung der Qualität des Objekts erlaubt, basierend auf

  o einer für jeden Patch der Vielzahl der Patches gesonderten Ermittlung, ob der jeweilige Patch des dritten Bildinformations-Abschnitts eine Anomalie oder mehrere Anomalien aufweist, mittels des ersten NN-Algorithmus, wobei bei Vorhandensein einer Anomalie ein Fehler erkannt wird, und/oder
  o einer Erkennung erfolgt, ob in dem mindestens einen vierten Bildinformations-Abschnitt ein Fehler vorliegt, und einer entsprechenden Klassifizierung des jeweiligen vierten Bildinformations-Abschnitts mittels des zweiten NN-Algorithmus.

In einem Ausführungsbeispiel der Vorrichtung ist die Datenverarbeitungseinrichtung dazu eingerichtet, nach Berücksichtigung der Perspektive und/oder der optischen Verzerrung der Matrixkamera mindestens eine Abmessung des Objekts und/oder mindestens eine Größe eines ermittelten Fehlers zu ermitteln.

Zu den obigen Ausführungsbeispielen der Vorrichtung wird auf die obigen Erläuterungen des Verfahrens und der Vorrichtung verwiesen. Hier werden weitere Ausführungsbeispiele sowie deren Vorteile dargestellt, die auch für die entsprechende Vorrichtung als offenbart gelten sollen.

Nachfolgend werden weitere Vorteile, Merkmale und Anwendungsmöglichkeiten der Erfindung anhand von Ausführungsbeispielen und den Figuren beschrieben. Alle beschriebenen und/oder bildlich dargestellten Merkmale bilden dabei den Gegenstand der vorliegenden Erfindung, auch unabhängig von ihrer Zusammenfassung in den Ansprüchen und deren Rückbezügen.

Es zeigen schematisch:

Fig. 1 ein Ausführungsbeispiel einer für das erfindungsgemäß Verfahren verwendete Vorrichtung in einer ersten perspektivischen Ansicht von der Seite,

Fig. 2 die Vorrichtung gemäß Fig. 1 in einer zweiten perspektivischen Ansicht von der Seite,

Fig. 3 die Vorrichtung gemäß Fig. 1 in einer Ansicht von der Seite mit den Randstrahlen von Beleuchtungseinrichtungen und des Sichtbereichs der Matrixkamera,

Fig. 4 die Vorrichtung gemäß Fig. 1 in einer Ansicht von vorn mit den Randstrahlen einer Beleuchtungseinrichtung und einem Mittelstrahl des Sichtbereichs der Matrixkamera,

Fig. 5 die Vorrichtung gemäß Fig. 1 in einer Ansicht von vorn mit den Randstrahlen von Beleuchtungseinrichtungen und den Randstrahlen des Sichtbereichs der Matrixkamera,

Fig. 6 die Vorrichtung gemäß Fig. 1 mit dem Sichtbereich der Matrixkamera in einer Ansicht von oben,

Fig. 7 ein Ausführungsbeispiel eines Systems bestehend aus zwei nacheinander angeordneten Vorrichtungen gemäß Fig. 1 in einer perspektivischen Ansicht von der Seite,

Fig. 8 ein erstes Beispiel für die Gestaltung eines Objekts (Pouch-Zelle) in einer perspektivischen Ansicht von der Seite,

Fig. 9 ein zweites Beispiel für die Gestaltung eines Objekts (Pouch-Zelle) in einer perspektivischen Ansicht von der Seite und

Fig. 10 ein Ausführungsbeispiel eines erfindungsgemäßen Verfahrens für eine Inspektion als Ablaufschema.

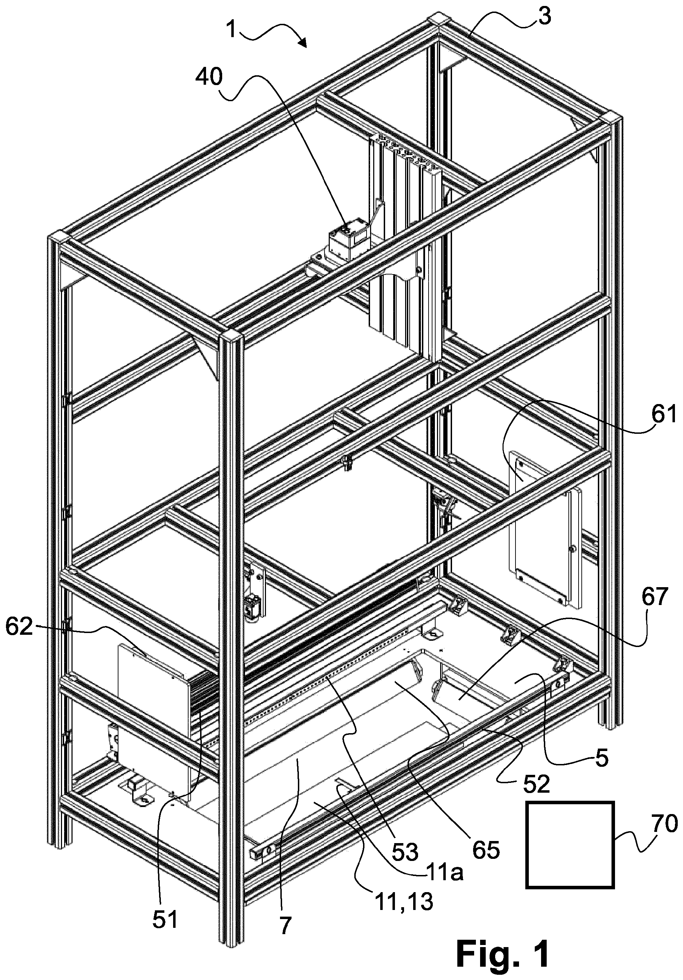

Das in den Fig. 1 bis 6 dargestellte Inspektionsvorrichtung dient zur Inspektion von Objekten, z.B. in der Form von Pouch-Zellen.

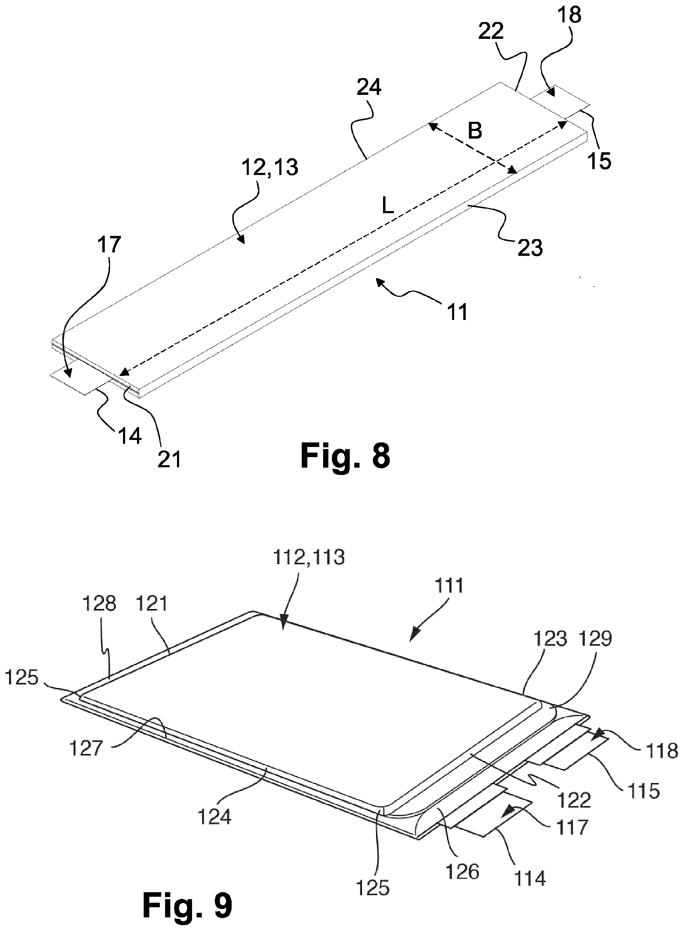

Zwei Beispiele für Pouch-Zellen 11, 111 sind in den Fig. 8 und 9 dargestellt.

Die Pouch-Zelle 11 (siehe Fig. 8) weist ein im Wesentlichen kissenförmiges Gehäuse 12 auf. Das Gehäuse 12 beinhaltet einen von einer kurzen Seite abragenden ersten Anschlusstab (Tab) 14 und einen von der gegenüber liegenden zweiten kurzen Seite abragenden zweiten Anschlusstab (Tab) 15. Das kissenartige Gehäuse 12 weist eine Oberseite mit einem im Wesentlichen horizontal verlaufenden oberen Oberflächenabschnitt 13 auf. Der erste Tab 14 hat eine obere Tab-Oberfläche 17 und der zweite Tab 15 hat entsprechend eine obere Tab-Oberfläche 18. In Fig. 8 nicht zu sehen sind entsprechende untere Tab-Oberflächen der Tabs 14, 15. Das Gehäuse 12 ist im Wesentlichen quaderförmig gestaltet. An den kurzen Seiten weist das Gehäuse 12 Seitenflächen 21, 22 und an den langen Seiten Seitenflächen 23, 24 auf. Die Seitenflächen 21, 22, 23, 24 verlaufen in etwa senkrecht zu dem horizontalen oberen Oberflächenabschnitt 13. Der horizontale oberen Oberflächenabschnitt 13, die oberen Tab-Oberflächen 17, 18 der Tabs 14, 15 und die Seitenflächen 21, 22, 23, 24 bilden zusammen die Oberseite des Gehäuses 12. Die Unterseite ist entsprechend gestaltet und weist einen horizontalen unteren Oberflächenabschnitt, untere Tab-Oberflächen der Tabs 14, 15 sowie die Seitenflächen 21, 22, 23, 24 auf. Bei diesem Ausführungsbeispiel gehören die Seitenflächen 21, 22, 23, 24 sowohl zu der Oberseite als auch zu der Unterseite, da diese bei der Inspektion der Oberseite bzw. der Unterseite jeweils ebenfalls erfassbar sind. In Fig. 8 wird die Länge des Gehäuses 12 mit L (ohne Berücksichtigung der Tabs 14, 15) und die Breite mit B bezeichnet (siehe gestrichelte Doppel-Pfeillinien). Aufgrund der einfachen Gestaltung der Pouch-Zelle 11 wird diese für die Erläuterung der Arbeitsweise der Inspektionsvorrichtung 1 (siehe Fig. 1 bis 6) verwendet. Entsprechend kann die Inspektionsvorrichtung 1 jedoch auch für andere Typen von Objekten, insbesondere in der Form von Pouch-Zellen, verwendet werden.

Fig. 9 zeigt ein zweites Beispiel einer Pouch-Zelle 111, welche ein im Wesentlichen kissenförmiges Gehäuse 112 mit einem horizontalen oberen Oberflächenabschnitt 113 aufweist. Das Gehäuse 112 beinhaltet zudem einen ersten Anschlussstab (Tab) 114 und einen zweiten Anschlussstab (Tab) 115, welche nebeneinander angeordnet sind und von einer einzigen kurzen Seite abragen. Der erste Tab 114 besitzt eine obere Tab-Oberfläche 117 und der zweite Tab 115 besitzt eine obere Tab-Oberfläche 118.

Die Pouch-Zelle 111 weist ferner an dem Gehäuse 112 rund um den horizontalen oberen Oberflächenabschnitt 113 Seitenkanten 121, 122, 123, 124 auf, die schräg zu dem horizontalen oberen Oberflächenabschnitt 113 verlaufen und mit einer Rundung in diesen übergehen. Im Übergang einer Seitenkante zu der benachbarten Seitenkante einen 121, 122, 123, 124 sind Ecken 125 ausgebildet. Weiter weist das Gehäuse 112 Terrassenabschnitte 126, 127, 128, 129 auf, die sich jeweils an die Seitenkanten 121, 122, 123, 124 anschließen und im Wesentlichen parallel zu dem horizontalen oberen Oberflächenabschnitt 113 verlaufen. Die Oberseite des Gehäuses 112 wird gebildet durch den horizontalen oberen Oberflächenabschnitt 113, die Seitenkante 121, 122, 123, 124, die Ecken 125 sowie die Terrassenabschnitte 126, 127, 128, 129.

Die in den Fig. 1 bis 6 gezeigte Vorrichtung 1 zur Inspektion der Pouch-Zelle 11 besitzt ein Gestell 3, an dem eine Bodenplatte 5 angeordnet ist, welche eine erste durchgehende Öffnung 7 und eine zweite durchgehende Öffnung 8 (vergleiche Fig. 1, 2 und 6) besitzt. Aus einer Vielzahl von zu inspizierenden Pouch-Zellen sind in den Fig. 1 bis 6 zwei zu inspizierende Pouch-Zellen 11, 31 dargestellt, die unterhalb der Bodenplatte 15 an der Inspektionsvorrichtung 1 vorbeigeführt werden, wie dies die Pfeile 11a und 31a veranschaulichen sollen. Die Pouch-Zelle 31 ist eine weitere Pouch-Zelle mit einem Aufbau, der wie in Fig. 8 dargestellt gestaltet ist.

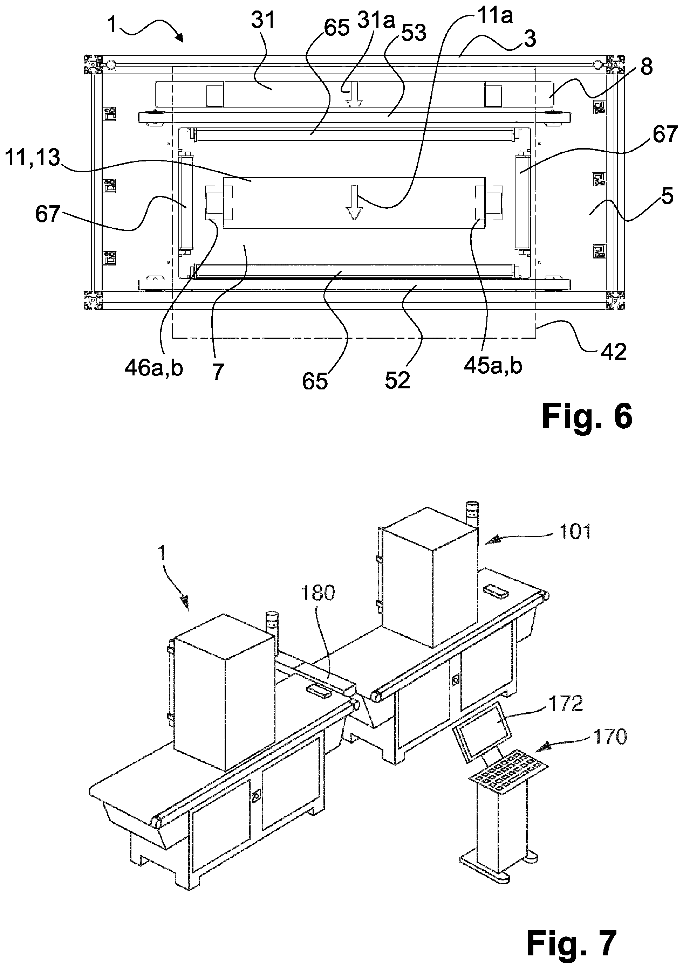

Oberhalb der Bodenplatte 5 ist an dem Gestell 3 eine Matrixkamera 40 angeordnet, die von oben durch die Öffnungen 7, 8 auf die Pouch-Zellen 11, 31 schaut. Hierbei sind die Pouch-Zellen 11, 31 derart angeordnet, dass jeweils die Oberseite des Gehäuses 12 oben liegt und der horizontale obere Oberflächenabschnitt 13 von oben mit der Matrixkamera 40 betrachtet werden kann. Auch die obere Tab-Oberfläche 17 des ersten Tabs 14 und die obere Tab-Oberfläche 18 des zweiten Tabs 15 werden von der Matrixkamera 40 erfasst. Hierbei ist der Sichtbereich 42 der Matrixkamera 40 so groß (siehe insbesondere Fig. 6), dass dieser sich über beide Öffnungen 7, 8 erstreckt und zwar derart, dass durch den Sichtbereich 42 der Matrixkamera 40 sowohl die unter der jeweiligen Öffnung 7, 8 angeordnete Pouch-Zelle 11, 31 in ihrer gesamten Länge und Breite (von oben betrachtet) als auch neben der Pouch-Zelle 11 angeordnete Umlenkspiegel 65, 67 mit erfasst werden.

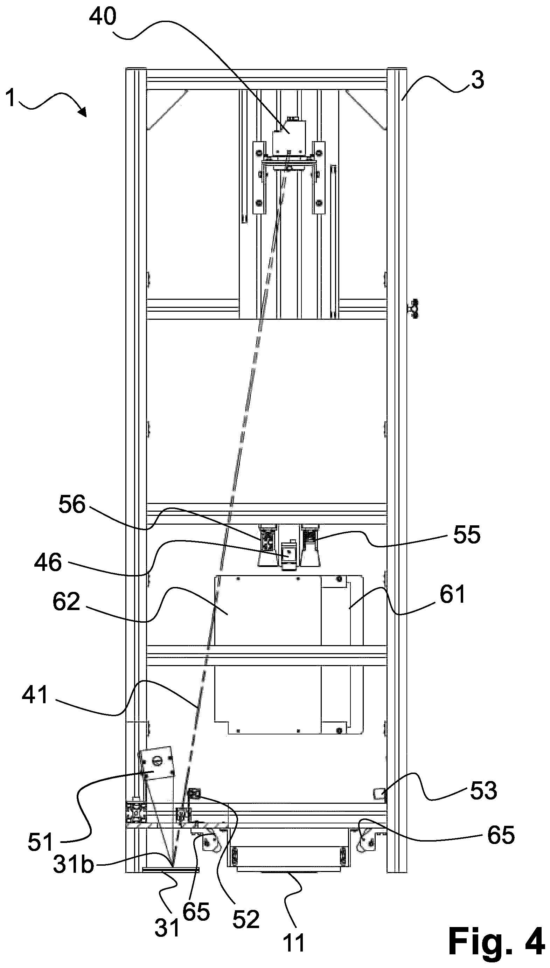

Weiter ist an dem Gestell 3 eine Linien-Beleuchtungseinrichtung 51 vorgesehen, welche einen linienförmigen Bereich 31b der Oberseite des Gehäuses und der oberen Tab-Oberflächen der Tabs beleuchtet. Wie aus Fig. 4 hervorgeht, gelangt das von der Oberseite des Gehäuses (einschließlich der oberen Tab-Oberfläche) reflektierte Licht über den Sichtstrahl 41 in die Matrixkamera 40 und wird dort erfasst. Die Matrixkamera 40 erfasst somit zeilenweise den jeweils beleuchteten linienförmigen Bereich 31b der Pouch-Zelle 31, wobei sich bei der Erfassung die Pouch-Zelle 31 quer zur Länge der Öffnung 8 (siehe Pfeil 31 A in Fig. 6) bewegt, d.h. sich im Bewegungszustand befindet. Es wird somit eine Vielzahl von Aufnahmen mittels der Matrixkamera 40 erzeugt. Jede Aufnahme beinhaltet jeweils eine Aufnahme des jeweils beleuchteten linienförmigen Bereichs der Oberseite des Gehäuses (einschließlich der oberen Tab-Oberflächen) der sich vorbeibewegenden Pouch-Zelle 31. Die Pouchzelle wird mittels einer unten genauer beschriebenen Bewegungseinrichtung im Bewegungszustand bewegt und für einen vorgegebenen Zeitraum in einen Ruhezustand gebracht sowie von dem Ruhezustand aus der Inspektionsvorrichtung herausbewegt.

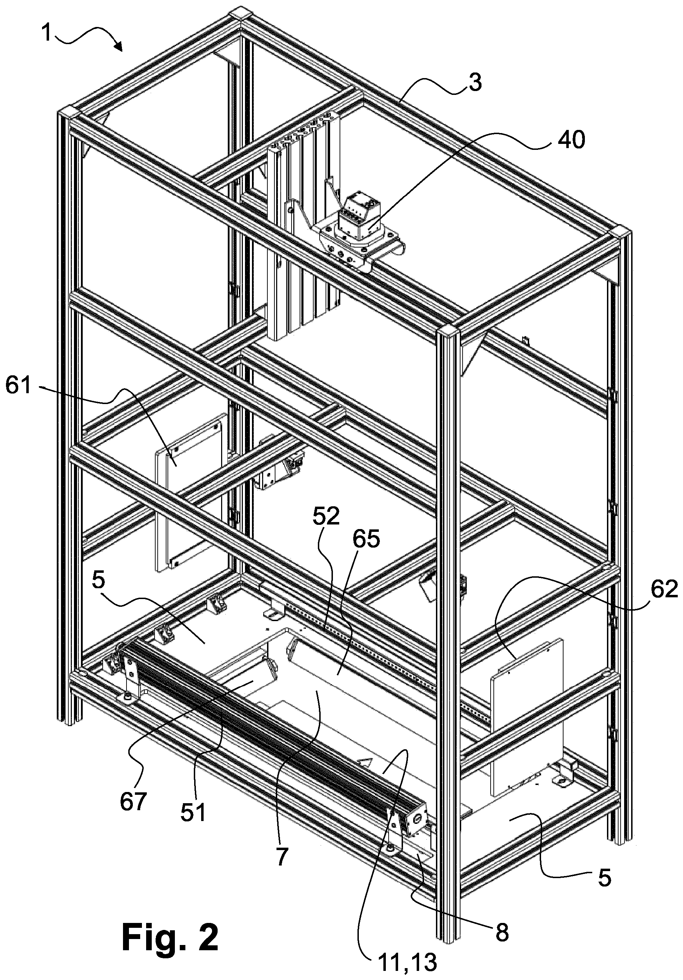

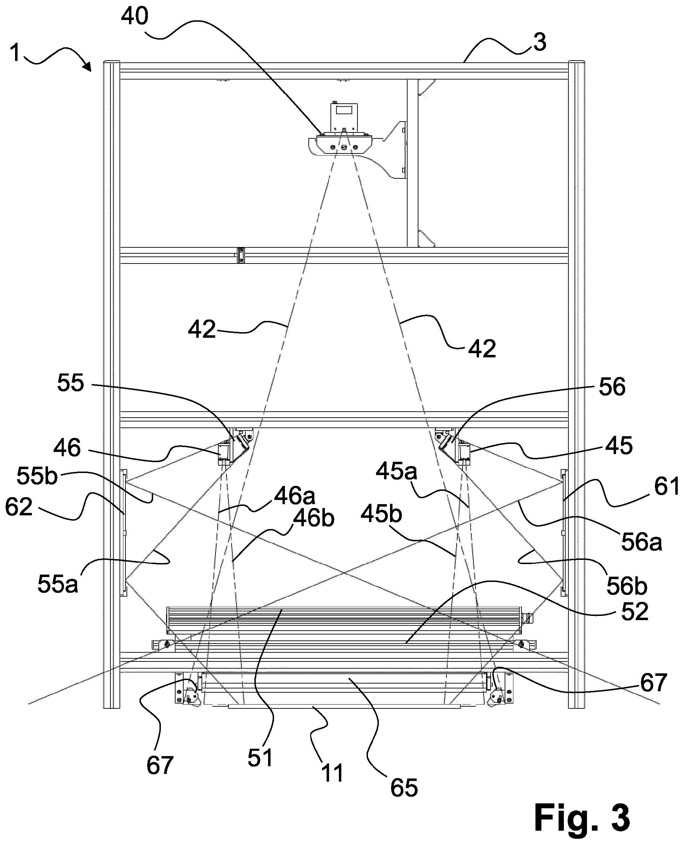

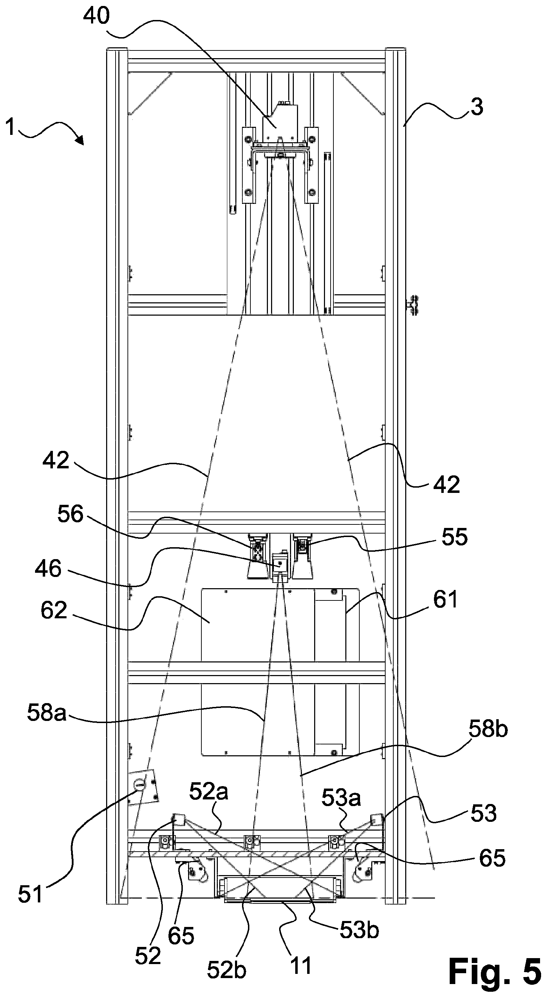

Zudem sind an dem Gestell vier Flächen-Beleuchtungseinrichtungen 52, 53, 55, 56 vorgesehen. Wie aus den Fig. 2, 3, 5 und 6 hervorgeht und die Randstrahlen 52a und 52b bzw. 53a, 53b der Flächen-Beleuchtungseinrichtungen 52, 53 zeigen, beleuchten die Flächen-Beleuchtungseinrichtungen 52, 53 die Oberseite des Gehäuses 12 (einschließlich der oberen Tab-Oberfläche 17, 18 der Tabs 14, 15) der Pouch-Zelle 11 über die gesamte Länge L + Tablänge von schräg oben, sodass insbesondere die der jeweiligen Flächen-Beleuchtungseinrichtung 52, 53 gegenüber liegende Seite bezogen auf die Breite der Pouch-Zelle 11 (vergleiche insbesondere Fig. 5) erfasst, die unterhalb der Öffnung 7 in der Bodenplatte 5 angeordnet ist. Wie aus Fig. 3 zu entnehmen ist, beleuchten die Flächen-Beleuchtungseinrichtungen 55, 56 die Oberseite des Gehäuses 12 (einschließlich der oberen Tab-Oberfläche 17, 18 der Tabs 14, 15) über die Spiegel 61, 62. Hierbei fällt das von der Flächen-Beleuchtungseinrichtung 55 ausgesandte Licht über den Spiegel 62 im Wesentlichen auf das gegenüberliegende erste Ende der Pouch-Zelle 11 und das von der Flächen-Beleuchtungseinrichtung 56 über den Spiegel 61 ausgesandte Licht im Wesentlichen auf das dem ersten Ende der Pouch-Zelle gegenüberliegende zweite Ende der Pouch-Zelle 11 (in Längsrichtung). Dies kann durch die Randstrahlen 55a, 55b, 56a und 56b nachvollzogen werden. Durch die Flächen-Beleuchtungseinrichtungen 52, 53, 55, 56 werden auch die Seitenflächen 21, 22, 23, 24 teilweise mit beleuchtet, sodass Reflexionen von diesen Seitenflächen und von dem horizontal verlaufenden oberen Oberflächenabschnitt 13 des Gehäuses 12 durch die Matrixkamera 40 erfasst werden. Das von den Seitenflächen 21, 22, 23, 24 reflektierte Licht der Flächen-Beleuchtungseinrichtungen 52, 53, 55, 56 wird insbesondere über die Umlenkspiegel 65, 67 erfasst, welche derart neben der unterhalb der Öffnung 7 angeordneten Pouch-Zelle 11 vorgesehen sind, dass mittels der Umlenkspiegel 65 die Seitenflächen 23, 24 an den langen Seiten des betrachtet werden, während die Umlenkspiegel 67 zur Erfassung der Seitenflächen 21, 22 an den kurzen Seite des Gehäuses 12 der Pouch-Zelle 11 dienen.

Die Beleuchtung mittels der Flächen-Beleuchtungseinrichtungen 52, 53, 55, 56 erfolgt nun derart, dass diese einzelnen nacheinander eingeschaltet werden, sodass die Pouch-Zelle 11 jeweils von einer Flächen-Beleuchtungseinrichtung von schräg oben beleuchtet wird, während die jeweils drei anderen Flächen-Beleuchtungseinrichtungen ausgeschaltet sind. Beispielsweise erfolgt die Beleuchtung zuerst durch die Flächen-Beleuchtungseinrichtung 52, dann durch die Flächen-Beleuchtungseinrichtung 55, danach durch die Flächen-Beleuchtungseinrichtung 53 und schließlich durch die Flächen-Beleuchtungseinrichtung 56. Die Matrix-Kamera 40 erfasst das jeweils reflektierte Licht bei den vier Beleuchtungs-Zuständen, wobei sich die Pouch-Zelle 11 bei allen vier Beleuchtungs-Zuständen im Ruhezustand, d.h. an dergleichen, vorgegebenen Position unterhalb der Öffnung 7 in der Grundplatte 5, befindet. Es werden demnach mittels der Matrix-Kamera 40 vier Aufnahmen der gesamte Oberseite des Gehäuses 12 (einschließlich der oberen Tab-Oberfläche 17, 18) erzeugt, welche diese Bereiche viermal matrixweise erfassen, nämlich je einmal bei eingeschalteter Flächen-Beleuchtungseinrichtung 52, Flächen-Beleuchtungseinrichtung 55, Flächen-Beleuchtungseinrichtung 53 und Flächen-Beleuchtungseinrichtung 56, wobei sich jeweils die Pouch-Zelle 11 an der gleichen Position befindet.

Bei den vier matrixweise Erfassungen der gesamten Oberseite des Gehäuses 12 (einschließlich der oberen Tab-Oberfläche 17, 18) werden über die Umlenkspiegel 65, 67 auch die Seitenflächen 21, 22, 23, 24 erfasst, denn das von diesen Seitenflächen 21, 22, 23, 24 reflektierte Licht gelangt über die Umlenkspiegel 65, 67 zur Matrixkamera 40, denn der Sichtbereich 42 der Matrixkamera 40 schließt diese Bereiche, wie in Fig. 6 dargestellt, ein.

Die Vielzahl der zeilenweisen Erfassungen und der matrixweisen Erfassungen der Pouch-Zelle 11, 31 durch die Matrixkamera 40 wird nach ihrer Erfassung an die Datenverarbeitungseinrichtung (Computer) 70 (vergleiche Fig. 1) übermittelt. Die Datenverarbeitungseinrichtung 70 empfängt die Bildinformationen aus den zeilenweisen und matrixweisen Erfassungen der jeweiligen Pouch-Zelle 11, 31.

Hierbei werden der Bewegungszustand und der Ruhezustand der Pouch-Zellen 11, 31 mittels einer Bewegungserfassungseinrichtung der Inspektionsvorrichtung erfasst. Beispielsweise anhand einer Überwachung der Fortbewegung einer vorgegebenen Markierung auf der Pouch-Zelle 11, 31, beispielsweise eines Barcodes, oder entsprechender Signale von der Bewegungseinrichtung werden Bewegungsinformationen generiert, welche insbesondere die Information zu dem jeweiligen Bewegungszustand, in dem sich die jeweilige Pouch-Zelle 11, 31 befindet, beinhaltet. Beispielsweise kann die Bewegungseinrichtung an die Bewegungserfassungseinrichtung die Information übermitteln, dass eine Pouch-Zelle zur Inspektion bereitsteht (Startsignal). Ab diesem Zeitpunkt kann die Bewegungserfassungseinrichtung kontinuierlich die Bewegungsinformationen der Bewegungseinrichtung und somit der jeweiligen Pouch-Zelle erfassen (z.B. die Bewegungsgeschwindigkeit der Bewegungseinrichtung). Alternativ oder zusätzlich erhält die Bewegungserfassungseinrichtung ein Signal, wenn die zeilenweise Erfassung der jeweiligen Pouch-Zelle beendet ist. Anschließend wird von der Bewegungseinrichtung oder anhand einer Markierung der Pouch-Zelle ein Signal generiert und an die Bewegungserfassungseinrichtung übermittelt, wenn sich die jeweilige Pouch-Zelle an der vorgegebenen Position des Ruhezustands befindet und dort unbewegt verharrt. Nach Abschluss der matrixweisen Erfassung der jeweiligen Pouch-Zelle wird dann von der Bewegungserfassungseinrichtung ein weiteres Signal generiert, welches anzeigt, dass die jeweilige Pouch-Zelle aus der Inspektionsvorrichtung heraus transportiert werden kann. Auch diese Signale stellen wichtige Bewegungsinformationen dar, die für die Verarbeitung der Bildinformationen erforderlich sind.

Diese Bildinformationen und die Bewegungsinformationen werden mittels der Datenverarbeitungseinrichtung 70 weiterverarbeitet und ausgewertet und es wird hieraus, wie unten detaillierter dargestellt wird, das Objekt im Hinblick auf das Vorhandensein eines Fehlers mindestens eines Fehlertyps beurteilt und/oder eine Qualitäts-Kennzahl ermittelt, welche eine Beurteilung der Qualität der Pouch-Zelle 11, 31 erlaubt. Hierbei werden die zu unterschiedlichen Zeitpunkten ermittelten Bildinformationen aus der zeilenweisen Erfassung und der matrixweisen Erfassung der jeweiligen Pouch-Zelle 11, 31 bzw. dem Bewegungszustand und dem Ruhezustand zugeordnet. Dies kann beispielsweise anhand der jeweils von der Bewegungserfassungseinrichtung übermittelten Bewegungsinformationen zum Bewegungszustand und Ruhezustand der jeweiligen Pouch-Zelle 11, 31 erfolgen. Hierbei werden die Bildinformationen der erzeugten Aufnahmen hinsichtlich des Bildzuschnitts, der Spiegelverzerrung, der zeilenweisen Erfassung (sogenannte Linescan-Korrektur) und hinsichtlich der mit dem jeweiligen Bewegungszustand oder Ruhezustand verknüpften Position korrigiert.

Aus den Bildinformationen der zeilenweisen Erfassung der jeweiligen Pouch-Zelle 11, 31 können beispielsweise mittels Hellfeldbeleuchtung (Reflection-Bright-Field (RBF) Beleuchtung) Fehler gesucht bzw. eine Qualitäts-Kennzahl ermittelt werden, die sich insbesondere auf eine Bewertung der Tab-Oberflächen und eine mögliche Kontamination mittels Elektrolyten beziehen. Beispielsweise wird, wie unten genauer ausgeführt wird, durch die Datenverarbeitungseinrichtung 70 aus der Anzahl, Fehlertyp und Größe/Dimension von ermittelten Fehlern eine Qualitätsaussage (Qualitäts-Kennzahl) generiert.

An dem Gestell 3 sind zudem weitere Kameras 45, 46 angeordnet, die unterhalb der Matrixkamera an dem Gestell 3 befestigt sind. Sie blicken derart von oben auf die Oberseite der Pouch-Zelle 11 (siehe Randstrahlen 45a, 45b, 46a, 46b), dass sie eine obere Tab-Oberfläche 17 des ersten Tabs 14 und eine obere Tab-Oberfläche 18 des zweiten Tabs 15 beobachtet sowie gegebenenfalls einen angrenzenden Abschnitt des oberen Oberflächenabschnitts der Oberseite 13. Die weiteren Kameras 45, 46 erzeugen Bilder mit einer höheren Auflösung in den angegebenen Abschnitten der Pouch-Zelle 11. Die aus den entsprechenden Sichtbereichen gewonnenen Bildinformationen werden an die Datenverarbeitungseinrichtung 70 übermittelt und hieraus weitere Informationen in Bezug auf das Vorhandensein von kleineren Fehlem erzeugt.

Fig. 7 zeigt ein erfindungsgemäßes System zur Inspektion einer Pouch-Zelle. Die Oberseite der Pouch-Zelle (z.B. Pouch-Zelle 11) wird zuerst mittels der Inspektionsvorrichtung 1 inspiziert. Anschließend gelangt die Pouch-Zelle (z.B. Pouch-Zelle 11) zu der Wende-Einrichtung 180 mit einer Dreheinrichtung und Greifern mit Saugnäpfen, welche die Pouch-Zelle (z.B. Pouch-Zelle 11) wendet, dass nun die Unterseite oben liegt. Anschließend wird die Pouch-Zelle (z.B. Pouch-Zelle 11) mittels einer Inspektionsvorrichtung 101, welche baugleich zu der Inspektionsvorrichtung 1 ist, inspiziert, und zwar deren Unterseite (die dort oben liegt). Die Verarbeitung der mittels der Inspektionsvorrichtungen 1, 101 erhaltenen Bilddaten im Hinblick auf die Pouch-Zelle (z.B. Pouch-Zelle 11) und die aus diesen Bildinformationen generierte Feststellung, ob ein Fehler/mehrere Fehler mindestens eines Fehlertyps vorliegt, und/oder Ermittlung einer Qualitäts-Kennzahl, welche eine Beurteilung der Qualität des Objekts erlaubt, erfolgt mittels der Datenverarbeitungseinrichtung 170, welche mit einem Display 172 für die Anzeige der Ergebnisse der Inspektion verbunden ist. Die Pouch-Zelle (z.B. Pouch-Zelle 11) wird von der ersten Inspektionsvorrichtung 1 zu der Wende-Einrichtung 180 und zur zweiten Inspektionsvorrichtung 101 mittels einer Bewegungseinrichtung transportiert, die beispielsweise Schlitten umfasst, die auf einer Lineareinheit verschiebbar sind. Die jeweilige Pouch-Zelle ist mittels Saugnäpfen auf einem Schlitten befestigt. Nach dem Abschluss der Erfassung der Bildinformationen durch die Matrixkamera 40 und gegebenenfalls durch die weiteren Kameras 45, 46, insbesondere nach Abschluss der matrixweisen Erfassung der jeweiligen Pouch-Zelle wird ein entsprechendes Signal durch die Inspektionsvorrichtung erzeugt, welches an die Steuerung der Bewegungseinrichtung übermittelt wird. Die Bewegungseinrichtung wird dann so gesteuert, dass diese die jeweilige Pouch-Zelle aus der jeweiligen Inspektionsvorrichtung 1, 101 herausfördert und gegebenenfalls zur Wende-Einrichtung 180 weitertransportiert, um anschließend gewendet und dann an die zweite Inspektionsvorrichtung 101 weitertransportiert zu werden.

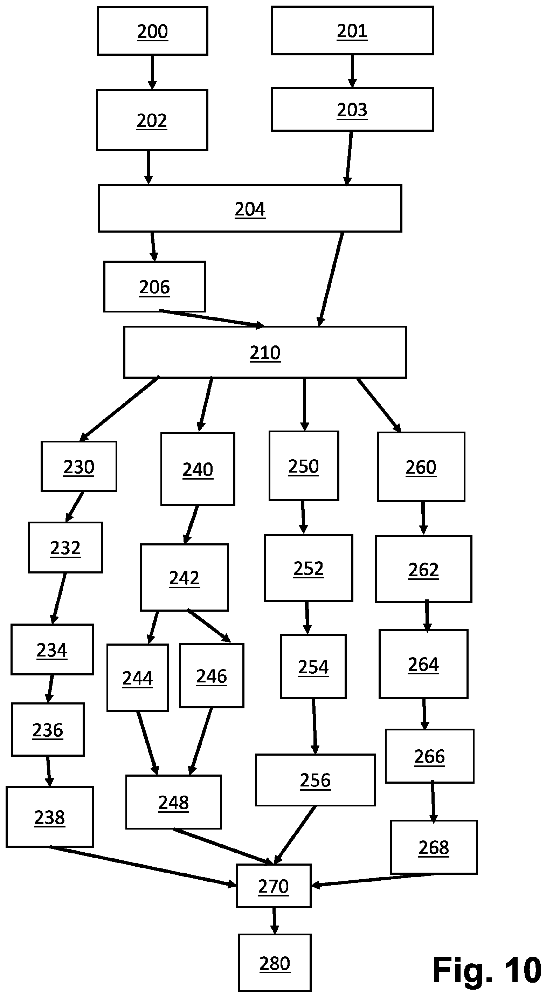

Die Auswertung der erfassten Bildinformationen, um das Vorhandensein eines Fehlers festzustellen und/oder eine Qualitäts-Kennzahl zu ermitteln, kann beispielsweise wie folgt durchgeführt werden. Das Verfahren wird anhand des Ablaufschemas, das in Fig. 10 dargestellt ist, verdeutlicht.

Ausgangspunkt für die Auswertung der erfassten Bildinformationen sind die vier durch Beleuchtung aus unterschiedlichen Beleuchtungsrichtungen erzeugten matrixweise erfassten Bildinformationen 200 der Oberseite des Objekts sowie die zeilenweise erfassten Bildinformationen 201 der Oberseite des Objekts am Beispiel der Pouch-Zelle 101.

Wie oben beschrieben wurde, wird bei den vier matrixweise erfassten Bildinformationen jeweils in einem Schritt 202 zuerst die Perspektive und/oder die optische Verzerrung der Matrixkamera kompensiert. Anschließend wird die bei der optischen Erfassung durch die Matrixkamera vorhandene tatsächliche Lage des Objekts in einem Schritt 204 (Positionskorrektur), wenn erforderlich, so korrigiert, das heißt gedreht und/oder verschoben, dass die Bilddaten eine vorgegebene Position des Objekts im Sichtbereich der Matrixkamera einnehmen. Parallel dazu wird die Vielzahl der einzelnen, durch die Datenverarbeitungseinrichtung 70 die zeilenweise erfassten Bildinformationen 201 in Schritt 203 zu einem einzigen Bild zusammengefasst, wobei dieses einzige Bild dann einen Matrix an Bildinformationen beinhaltet, und in Bezug auf Unstimmigkeiten beim Zusammensetzen des Bildes der Oberseite des Objekts aus den zeilenweise erfassten Bildinformationen korrigiert und zwar so, wie dies oben beschrieben wurde. Anschließend werden auch diese Daten in Schritt 204 hinsichtlich ihrer Position wie vorstehend beschrieben korrigiert. Die zusammengesetzten und korrigierten zeilenweise erfassten Bildinformationen bilden die zweite Gesamtmatrix.

Für die vier matrixweise erfassten, kompensierten und korrigierten Bildinformationen schließt sich die Bestimmung eines Maximalbilds, eines Absorptionsbilds und/oder eines Topologiebilds in Schritt 206 der Oberseite des Objekts an. Die Berechnung aus den vier Matrizen mit Bildinformationen wird oben im Detail beschrieben. Das Maximalbild wird auch als erste Gesamtmatrix bezeichnet.

Nun wird in Schritt 210 eine Segmentierung vorgenommen. Wie oben im Detail erläutert wird, werden Layout-Rezepte verwendet, um gewünschte Bildinformations-Abschnitte aus der jeweiligen, durch matrixweise Erfassung oder zeilenweise Erfassung bestimmten (korrigierten) Bildinformationsmatrix der Oberseite zu extrahieren. Beispielsweise wird ein erster Bildinformations-Abschnitt in Form des oberen Oberflächenabschnitts (Bildinformationen aus direkter Aufnahme durch die Kamera/Matrixkamera) 113, ein zweiter Bildinformations-Abschnitt aus den Aufnahmebereichen über die Spiegel an der kürzeren Seite in Form der jeweils zwei Eck-Abschnitte 125 und ein weiterer zweiter Bildinformations-Abschnitt in Form der vier Terrassenabschnitte (Bildinformationen aus direkter Aufnahme durch die Kamera/Matrixkamera) 126, 127, 128, 129 extrahiert. Die Segmentierung erfolgt sowohl im Hinblick auf die korrigierten und zusammengesetzten zeilenweise erfassten Bildinformationen als auch in Bezug auf die matrixweise erfassten, kompensierten und korrigierten Bilddaten sowie das Maximalbild und/das Absorptionsbild und/oder das Topologiebild.

Anschließend werden die durch Segmentierung gewonnenen Bildinformations-Abschnitte auf parallelen Wegen verarbeitet und schließlich einer Gesamtbewertung des Objekts zugeführt.

Das Ergebnis der Segmentierung ist in Schritt 230 beispielsweise ein Bildinformations-Abschnitt der oberen Oberfläche jeweils in dem Maximalbild, in dem Absorptionsbild, in dem Topologiebild und in der zweiten Gesamtmatrix. In Schritt 232 untersucht die Datenverarbeitungseinrichtung 70 zu jedem dieser Bildinformations-Abschnitte in Bezug auf jeden Pixel, ob diese einen vorgegebenen Schwellwert überschreiten. Ein derartiger Schwellwert könnte bei dem Bildinformations-Abschnitt des Maximalbilds bei 240 liegen, bei dem Bildinformations-Abschnitt des Topologiebilds bei 220, bei dem Bildinformations-Abschnitt des Absorptionsbilds bei 203 und bei dem Bildinformations-Abschnitt der zweiten Gesamtmatrix bei 120. Liegt der Bildinformations-Wert des jeweiligen Pixels bei dem jeweiligen Schwellwert oder darüber, dann wird ein Fehler erkannt. Anschließend werden in Schritt 234 weitere Eigenschaften des gefundenen Fehlers ermittelt, beispielsweise dessen Größe (durch die Analyse, ob ein Fehler auch bei benachbarten Pixeln erkannt wurde) in Pixeln, ein Histogramm der Bildinformations-Werte im Bereich des jeweiligen Fehlers, und/oder die Form und Ausrichtung des Fehlers. Anhand der Eigenschaften des gefundenen Fehlers und gegebenenfalls weiterer in dem Bildinformations-Abschnitt gefundener Fehler wird danach in Schritt 236 der Fehlertyp bestimmt, wobei hierfür verschiedene Bilder/Matrizen in Bezug auf den gleichen Ort des Bildinformations-Abschnitts herangezogen werden können. Beispielsweise kann aufgrund eines Nichtvorliegen eines Fehlers an der Stelle im Absorptionsbild, aufgrund des ermittelten Wertes Länge zu Breite im Absorptionsbild von größer als 5 und aufgrund eines mittleren Werts eines Bildinformations-Histogramms entlang des Fehlers im Topologiebild, der größer als 200 ist, insgesamt auf den Fehlertyp "Kratzer" geschlossen werden. In Schritt 238 wird dann der Schweregrad des erkannten Kratzer-Fehlers ermittelt, wobei die Ermittlung beispielsweise auf einer Zuordnung der Größe des Kratzers zu Schweregrad-Klassen erfolgen kann. Hierbei kann, wenn der Fehler kleiner als 2 Pixel ist, dem Kratzer-Fehler der Schweregrad Null, wenn der Fehler größer oder gleich 2 Pixel und kleiner als 4 Pixel ist, dem Kratzer-Fehler der Schweregrad 1, wenn der Fehler größer oder gleich 4 Pixel und kleiner als 6 Pixel ist, dem Kratzer-Fehler der Schweregrad 2 und so weiter zugeordnet werden.

Das Ergebnis der Segmentierung sind in Schritt 240 beispielsweise Bildinformations-Abschnitte in Form von vier Eckenabschnitten (z.B. 128 x 128 Pixel) aus dem in Schritt 206 bestimmten Maximalbild, wobei die Eckenabschnitte beispielsweise aus den über die Spiegel 67 an der kurzen Seite des Pouches erzeugten Bildinformationen gewonnen werden. Wie oben beschrieben wurde, wird auf diese Bildinformations-Abschnitte in Schritt 242 jeweils der oben beschriebene CNN-Algorithmus mit binärem Klassifikator angewendet. Als Ergebnis wird zu jedem Ecken-Bildinformations-Abschnitt das Attribut "defekte Ecke" (Schritt 244) oder "intakte Ecke" (Schritt 246) bestimmt und in Schritt 248 der jeweiligen Ecke zugeordnet.

Ergebnisse der Segmentierung sind in Schritt 250 beispielsweise Bildinformations-Abschnitte in Form von Terrassenabschnitten (zu den Terrassen 126, 127, 128, 129) aus dem in Schritt 206 bestimmten Maximalbild, wobei die Bildinformationen durch direkte Aufnahme mittels der Matrix-kamera 40 von oben erzeugt worden sind. Nun wird auf diese Terrassen-Bildinformations-Abschnitte der Mask-RCNN-Algorithmus angewendet (siehe oben detaillierter beschrieben, Schrit 252). Als Ergebnis werden Fehler in den Terrassen-Bildinformations-Abschnitten verschiedener Fehlertypen erkannt und mit einer Bounding-Box versehen (Schritt 254). Auch in Bezug auf die so erkannten Fehler auf den Terrassen-Bildinformations-Abschnitten wird anschließend der Schweregrad des jeweiligen Fehlers bestimmt, zum Beispiel basierend auf dem ermittelten Fehlertyp, der Größe der Bounding Box, der Form der Bounding Box etc. (Schritt 256).

Das Ergebnis der Segmentierung sind in Schritt 260 beispielsweise Bildinformations-Abschnitte in Form des oberen Oberflächenabschnitts 113, zum Beispiel das Maximalbild, und in der Form der zweiten Gesamtmatrix (aus der zeilenweise Erfassung). Auch diese Bildinformations-Abschnitte werden in Schritt 262 in Patches unterteilt, wobei zuvor gegebenenfalls die Auflösung des jeweiligen Abschnitts auf einen vorgegebenen Wert (Beispiel siehe oben) reduziert werden kann. Anschließend werden die Bildinformations-Abschnitte in Schritt 264 wie oben beschrieben mittels dem vortrainierten CNN-Algorithmus "Wide ResNet-50" analysiert. Gegebenenfalls wird in einigen Patches eine Anomalie oder mehrere Anomalien festgestellt. In Schritt 266 werden der Mahalanobis-Abstand zur Normalverteilung für jedes Patch, in dem eine Anomalie ermittelt wurde, und jede festgestellte Anomalie bestimmt. Hieraus wird in Schritt 268 der Schweregrad der Anomalie und damit des jeweiligen Fehlers bestimmt.

Der Schweregrad des Fehlers wird in allen oben genannten Fällen in Form von vorgegebenen Klassen ausgedrückt.

Anschließend wird in Schritt 270 durch die Datenverarbeitungseinrichtung 70 die Qualität der Pouch-Zelle 111 insgesamt bewertet und zwar basierend auf allen, in den vier Analyse-Strängen ermittelten Fehlern, dem jeweiligen Fehlertyp und dem jeweiligen Schweregrad des Fehlers. Es wird bewertet, ob die Pouch-Zelle 111 insgesamt den vorgegebenen Qualitätsanforderungen entspricht oder nicht. In Schritt 280 wird das Ergebnis der Gesamtbewertung an einer Schnittstelle der Datenverarbeitungseinrichtung ausgegeben, gegebenenfalls zusammen mit einer Liste der ermittelten Fehler und deren Eigenschaften. Beispielsweise wird eine Pouch-Zelle mit zwei Fehlern vom Typ "Dent" der Schweregrad-Klasse 5 als für die Qualitätsanforderungen ausreichend beurteilt. Demgegenüber kann beispielsweise eine Pouch-Zelle, die einen Fehler vom Fehlertyp "Dent" der Schweregrad-Klasse 7 aufweist, als nicht den Qualitätsanforderungen entsprechend eingestuft werden.

Das obige Verfahren kann analog auch für die Unterseite der Pouch-Zelle durchgeführt werden.

Wie oben gezeigt wurde, kann anhand des erfindungsgemäßen Verfahrens eine Inspektion eines dreidimensionalen Objekts, z.B. einer Pouch-Zelle, auf einfache und schnelle Weise durchgeführt werden, wobei bei der Analyse insbesondere die verschiedenen Eigenschaften der Abschnitte des Objekts berücksichtigt werden können.

**Patentansprüche**

1.  Verfahren zur Inspektion von 3-dimensionalen Objekten, beispielsweise von Pouch-Zellen (11, 31, 111), wobei jedes Objekt ein im Wesentlichen kissenförmiges oder quaderförmiges Gehäuse mit einer Oberseite und einer Unterseite aufweist,

    wobei sich die Oberseite des Gehäuses (12, 112) aus mindestens einem oberen Oberflächenabschnitt (13, 113) sowie einer Vielzahl von lateralen Oberflächenabschnitten (17, 18, 21, 22, 23, 24, 117, 118, 121, 122, 123, 124, 125, 126, 127, 128, 129) zusammensetzt, die zu dem mindestens einen oberen Oberflächenabschnitt (13, 113) schräg, parallel oder senkrecht verlaufen oder Eckenabschnitte (125) darstellen,
    wobei für jedes Objekt mittels einer Matrixkamera matrixweise erfasste Bildinformationen von an der Oberseite reflektiertem Licht einer Flächen-Beleuchtungseinrichtung in einem Ruhezustand des zu inspizierenden Objekts erzeugt und an eine Datenverarbeitungseinrichtung (70) übermittelt werden, wobei die matrixweise erfassten Bildinformationen Licht umfassen, das von den lateralen Oberflächenabschnitten reflektiert wurde, wobei die matrixweise erfassten Bildinformationen als erste Gesamtmatrix mittels der Datenverarbeitungseinrichtung weiter verarbeitet werden, wobei mittels der Datenverarbeitungseinrichtung (70) weiter folgende Schritte durchgeführt werden:

    • Segmentierung der ersten Gesamtmatrix

      o in einen ersten Bildinformations-Abschnitt umfassend die Bildinformationen des oberen Oberflächenabschnitts und
      o in mindestens einen zweiten Bildinformations-Abschnitt, wobei jeder zweite Bildinformations-Abschnitt die Bildinformationen mindestens eines vorgegebenen Abschnitts der lateralen Oberflächenabschnitte und/oder mindestens eines vorgegebenen Eckenabschnitts beinhaltet,

    • Zerlegung des ersten Bildinformations-Abschnitts in eine Vielzahl einzelner Patches,
    • Feststellen eines Fehlertyps eines erkannten Fehlers und/oder eines Schweregrads eines erkannten Fehlers und/oder Ermitteln einer Qualitäts-Kennzahl, welche eine Beurteilung der Qualität des Objekts erlaubt, basierend auf

      o einer für jeden Patch der Vielzahl der Patches gesonderten Ermittlung, ob der jeweilige Patch des ersten Bildinformations-Abschnitts eine Anomalie oder mehrere Anomalien aufweist, mittels eines entsprechend trainierten ersten NN-Algorithmus, wobei bei Vorhandensein einer Anomalie ein Fehler erkannt wird, und
      o einer Erkennung, ob in dem mindestens einen zweiten Bildinformations-Abschnitt ein Fehler vorliegt, und einer entsprechenden Klassifizierung des jeweiligen zweiten Bildinformations-Abschnitts mittels eines entsprechend trainierten, zweiten NN-Algorithmus, der von dem ersten NN-Algorithmus verschieden ist.

2.  Verfahren nach Anspruch 1, **dadurch gekennzeichnet, dass** die Klassifizierung des mindestens einen zweiten Bildinformations-Abschnitts mittels eines Klassifikators mit zwei Zuständen oder eines Klassifikators mit mindestens 3 Zuständen erfolgt, wobei der Klassifikator mit mindestens 3 Zuständen beispielsweise die Zuordnung verschiedener Fehlertypen erlaubt.

3.  Verfahren nach einem der vorhergehenden Ansprüche, **dadurch gekennzeichnet, dass** für jedes Objekt mit einer Kamera, beispielsweise mittels der Matrixkamera, eine Vielzahl von zeilenweise erfassten Bildinformationen von reflektiertem Licht einer Linien-Beleuchtungseinrichtung an linienförmigen Bereichen der Oberseite in einem Bewegungszustand des zu inspizierenden Objekts erzeugt und an eine Datenverarbeitungseinrichtung (70) übermittelt werden, wobei mittels der Datenverarbeitungseinrichtung (70) weiter folgende Schritte durchgeführt werden:

• Zusammensetzen der zeilenweise erfassten Bildinformationen zu einer zweiten Gesamtmatrix umfassend die Bildinformationen der Oberseite des Objekts,
• Feststellen eines Fehlertyps eines erkannten Fehlers und/oder eines Schweregrads eines erkannten Fehlers und/oder Ermitteln einer Qualitäts-Kennzahl, welche eine Beurteilung der Qualität des Objekts erlaubt, zusätzlich basierend auf den Bildinformationen der zweiten Gesamtmatrix.

4. Verfahren nach Anspruch 3, **dadurch gekennzeichnet, dass** mittels der Datenverarbeitungseinrichtung (70) weiter folgende Schritte durchgeführt werden:

• Segmentierung der zweiten Gesamtmatrix

o in einen dritten Bildinformations-Abschnitt umfassend die Bildinformationen des oberen Oberflächenabschnitts und/oder
o in mindestens einen vierten Bildinformations-Abschnitt, wobei jeder vierte Bildinformations-Abschnitt die Bildinformationen mindestens eines vorgegebenen Abschnitts der lateralen Oberflächenabschnitte und/oder mindestens eines vorgegebenen Eckenabschnitts beinhaltet,

• Zerlegung des dritten Bildinformations-Abschnitts in eine Vielzahl einzelner Patches,
• wobei das Feststellen eines Fehlertyps eines erkannten Fehlers und/oder eines Schweregrads eines erkannten Fehlers und/oder das Ermitteln einer Qualitäts-Kennzahl, welche eine Beurteilung der Qualität des Objekts erlaubt, basierend auf

o einer für jeden Patch der Vielzahl der Patches gesonderten Ermittlung, ob der jeweilige Patch des dritten Bildinformations-Abschnitts eine Anomalie oder mehrere Anomalien aufweist, mittels des ersten NN-Algorithmus, wobei bei Vorhandensein einer Anomalie ein Fehler erkannt wird, und/oder
o einer Erkennung erfolgt, ob in dem mindestens einen vierten Bildinformations-Abschnitt ein Fehler vorliegt, und einer entsprechenden Klassifizierung des jeweiligen vierten Bildinformations-Abschnitts mittels des zweiten NN-Algorithmus.

5. Verfahren nach einem der vorhergehenden Ansprüche, **dadurch gekennzeichnet, dass** für jedes Objekt mindestens n (n ≥ 2) Aufnahmen der Oberseite von matrixweise erfassten Bildinformationen durch eine zeitlich nacheinander erfolgende Erfassung von reflektiertem Licht generiert und an die Datenverarbeitungseinrichtung (70) übermittelt werden, wobei die matrixweise erfassten Bildinformationen als n erste Gesamtmatrizen mittels der Datenverarbeitungseinrichtung weiter verarbeitet werden, wobei das reflektierte Licht durch eine zeitlich separierte Beleuchtung der gesamten Oberseite des Gehäuses des Objekts in dem Ruhezustand des zu inspizierenden Objekts aus n verschiedenen Richtungen von schräg oben erzeugt wird.

6. Verfahren nach Anspruch 5, **dadurch gekennzeichnet, dass** mittels der Datenverarbeitungseinrichtung (70) weiter folgende Schritte durchgeführt werden:

• Segmentierung der n ersten Gesamtmatrizen

o in n fünfte Bildinformations-Abschnitte umfassend die Bildinformationen des oberen Oberflächenabschnitts jeder der n ersten Gesamtmatrizen und/oder
o in n sechste und gegebenenfalls weitere Bildinformations-Abschnitte jeder der n ersten Gesamtmatrizen, wobei jeder sechste und gegebenenfalls weiterer Bildinformations-Abschnitt die Bildinformationen mindestens eines vorgegebenen Abschnitts der lateralen Oberflächenabschnitte und/oder mindestens eines vorgegebenen Eckenabschnitts beinhaltet,

• Ermitteln jeweils eines Maximalbilds und/oder eines Absorptionsbilds und/oder eines Topologiebilds aus den Bildinformationen des fünften Bildinformations-Abschnitts und/oder des sechstens Bildinformations-Abschnitts und/oder der gegebenfalls weiteren Bildinformations-Abschnitte,
• Ermitteln von Fehlern sowie Analysieren und Charakterisieren von Fehlem in dem Maximalbild und/oder in dem Absorptionsbild und/oder in dem Topologiebild des fünften Bildinformations-Abschnitts und/oder des sechsten Bildinformations-Abschnitts und/oder gegebenenfalls der weiteren Bildinformations-Abschnitte,
• wobei das Feststellen eines Fehlertyps eines erkannten Fehlers und/oder eines Schweregrads eines erkannten Fehlers und/oder das Ermitteln einer Qualitäts-Kennzahl, welche eine Beurteilung der Qualität des Objekts erlaubt, auf dem Ergebnis der Analyse und/oder Charakterisierung der jeweils ermittelten Fehler basiert.

7. Verfahren nach einem der vorhergehenden Ansprüche, **dadurch gekennzeichnet, dass** für die Feststellung einer Anomalie in einem Patch ein Patch Distribution Modeling Framework for Anomaly Detection angewendet wird, wobei der Anomalie-Grad mittels Mahalanobis-Abstand in Bezug auf eine in dem jeweiligen Patch erwartete Normalverteilung ermittelt wird.

8. Verfahren nach einem der vorhergehenden Ansprüche, **dadurch gekennzeichnet, dass** der Ort der Anomalie in dem jeweiligen Patch ermittelt und zur Lokalisierung eines möglichen Fehlers in/auf dem Objekt herangezogen wird.

9. Verfahren nach einem der vorhergehenden Ansprüche, **dadurch gekennzeichnet, dass** durch die Datenverarbeitungseinrichtung nach Berücksichtigung der Perspektive und/oder der optischen Verzerrung der Matrixkamera mindestens eine Abmessung des Objekts und/oder mindestens eine Größe eines ermittelten Fehlers ermittelt wird.

10. Verfahren nach einem der vorhergehenden Ansprüche, **dadurch gekennzeichnet, dass** mittels der Datenverarbeitungseinrichtung eine Positionskorrektur mittels vorgegebener Fixpunkte des Objekts durchgeführt wird.

11. Verfahren nach einem der vorhergehenden Ansprüche, **dadurch gekennzeichnet, dass** vor Zerlegung des ersten Bildinformations-Abschnitts und/oder des dritten Bildinformations-Abschnitts in eine Vielzahl einzelner Patches die Auflösung des ersten Bildinformations-Abschnitts reduziert wird.

12. Vorrichtung (1, 101) zur Inspektion von 3-dimensionalen Objekten, beispielsweise von Pouch-Zellen (11, 31, 111), wobei jedes Objekt ein im Wesentlichen kissenförmiges oder quaderförmiges Gehäuse mit einer Oberseite und einer Unterseite aufweist,

   wobei sich die Oberseite des Gehäuses (12, 112) aus mindestens einem oberen Oberflächenabschnitt (13, 113) sowie einer Vielzahl von lateralen Oberflächenabschnitten (17, 18, 21, 22, 23, 24, 117, 118, 121, 122, 123, 124, 125, 126, 127, 128, 129) zusammensetzt, die zu dem mindestens einen oberen Oberflächenabschnitt (13, 113) schräg, parallel oder senkrecht verlaufen oder Eckenabschnitte (125) darstellen,
   mit einer Matrixkamera, welche für jedes Objekt matrixweise erfasste Bildinformationen von an der Oberseite reflektiertem Licht einer Flächen-Beleuchtungseinrichtung in einem Ruhezustand des zu inspizierenden Objekts erzeugt und an eine Datenverarbeitungseinrichtung (70) übermittelt, wobei die matrixweise erfassten Bildinformationen Licht umfassen, das von den lateralen Oberflächenabschnitten reflektiert wurde,
   wobei die Datenverarbeitungseinrichtung (70) derart eingerichtet ist, dass die matrixweise erfassten Bildinformationen als erste Gesamtmatrix weiter verarbeitet werden und dass sie folgende Schritte durchführt:

   • Segmentierung der ersten Gesamtmatrix

      o in einen ersten Bildinformations-Abschnitt umfassend die Bildinformationen des oberen Oberflächenabschnitts und
      o in mindestens einen zweiten Bildinformations-Abschnitt, wobei jeder zweite Bildinformations-Abschnitt die Bildinformationen mindestens eines vorgegebenen Abschnitts der lateralen Oberflächenabschnitte und/oder mindestens eines vorgegebenen Eckenabschnitts beinhaltet,

   • Zerlegung des ersten Bildinformations-Abschnitts in eine Vielzahl einzelner Patches,
   • Feststellen eines Fehlertyps eines erkannten Fehlers und/oder eines Schweregrads eines erkannten Fehlers und/oder Ermitteln einer Qualitäts-Kennzahl, welche eine Beurteilung der Qualität des Objekts erlaubt, basierend auf

      o einer für jeden Patch der Vielzahl der Patches gesonderten Ermittlung, ob der jeweilige Patch des ersten Bildinformations-Abschnitts eine Anomalie oder mehrere Anomalien aufweist, mittels eines entsprechend trainierten ersten NN-Algorithmus, wobei bei Vorhandensein einer Anomalie ein Fehler erkannt wird, und
      o einer Erkennung, ob in dem mindestens einen zweiten Bildinformations-Abschnitt ein Fehler vorliegt, und einer entsprechenden Klassifizierung des jeweiligen zweiten Bildinformations-Abschnitts mittels eines entsprechend trainierten, zweiten NN-Algorithmus, der von dem ersten NN-Algorithmus verschieden ist.

13. Vorrichtung nach Anspruch 12, wobei eine Kamera, beispielsweise die Matrixkamera, vorgesehen ist, welche dazu eingerichtet ist, eine Vielzahl von zeilenweise erfassten Bildinformationen von reflektiertem Licht einer Linien-Beleuchtungseinrichtung an linienförmigen Bereichen der Oberseite in einem Bewegungszustand des zu inspizierenden Objekts zu erzeugen und an eine Datenverarbeitungseinrichtung (70) zu übermitteln,
wobei die Datenverarbeitungseinrichtung zur Durchführung der folgenden Schritte eingerichtet ist:

• Zusammensetzen der zeilenweise erfassten Bildinformationen zu einer zweiten Gesamtmatrix umfassend die Bildinformationen der Oberseite des Objekts,
• Feststellen eines Fehlertyps eines erkannten Fehlers und/oder eines Schweregrads eines erkannten Fehlers und/oder Ermitteln einer Qualitäts-Kennzahl, welche eine Beurteilung der Qualität des Objekts erlaubt, zusätzlich basierend auf den Bildinformationen der zweiten Gesamtmatrix.

14. Vorrichtung nach Anspruch 13, wobei die Datenverarbeitungseinrichtung zur Durchführung der folgenden Schritte eingerichtet ist:

• Segmentierung der zweiten Gesamtmatrix

o in einen dritten Bildinformations-Abschnitt umfassend die Bildinformationen des oberen Oberflächenabschnitts und/oder
o in mindestens einen vierten Bildinformations-Abschnitt, wobei jeder vierte Bildinformations-Abschnitt die Bildinformationen mindestens eines vorgegebenen Abschnitts der lateralen Oberflächenabschnitte und/oder mindestens eines vorgegebenen Eckenabschnitts beinhaltet,

• Zerlegung des dritten Bildinformations-Abschnitts in eine Vielzahl einzelner Patches,
• wobei das Feststellen eines Fehlertyps eines erkannten Fehlers und/oder eines Schweregrads eines erkannten Fehlers und/oder das Ermitteln einer Qualitäts-Kennzahl, welche eine Beurteilung der Qualität des Objekts erlaubt, basierend auf

o einer für jeden Patch der Vielzahl der Patches gesonderten Ermittlung, ob der jeweilige Patch des dritten Bildinformations-Abschnitts eine Anomalie oder mehrere Anomalien aufweist, mittels des ersten NN-Algorithmus, wobei bei Vorhandensein einer Anomalie ein Fehler erkannt wird, und/oder
o einer Erkennung erfolgt, ob in dem mindestens einen vierten Bildinformations-Abschnitt ein Fehler vorliegt, und einer entsprechenden Klassifizierung des jeweiligen vierten Bildinformations-Abschnitts mittels des zweiten NN-Algorithmus.

15. Vorrichtung nach einem der Ansprüche 12 bis 14, wobei die Datenverarbeitungseinrichtung dazu eingerichtet ist, nach Berücksichtigung der Perspektive und/oder der optischen Verzerrung der Matrixkamera mindestens eine Abmessung des Objekts und/oder mindestens eine Größe eines ermittelten Fehlers zu ermitteln.

**Fig. 1**

**Fig. 2**

**Fig. 3**

**Fig. 4**

**Fig. 5**

**Fig. 6**

**Fig. 7**

**Fig. 8**

**Fig. 9**

Fig. 10

Europäisches
Patentamt

European
Patent Office

Office européen
des brevets

**EUROPÄISCHER RECHERCHENBERICHT**

Nummer der Anmeldung

EP 25 17 1164

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WANG XU ET AL: "Deep Learning-Based Visual Defect Inspection System for Pouch Battery Packs", 1. Januar 2023 (2023-01-01), 20230101, PAGE(S) 54 - 64, XP047643140, [gefunden am 2023-01-01] | 1,2,5,6, 8-12,15 | INV. G06T7/00 G01N21/88 G01N21/95 |
| Y | * Zusammenfassung * | 7 | |
| A | * Abschnitte 2-6 * * Tabelle 1 * * Abbildungen 1, 5, 7, 9 * | 3,4,13, 14 | |
| A | WO 2023/284712 A1 (GOERTEK INC [CN]) 19. Januar 2023 (2023-01-19) * Anspruch 1 * * Abbildung 4 * | 1,12 | |
| A | KR 102 129 459 B1 (NAT UNIV CHUNGBUK IND ACAD COOP FOUND [KR]) 2. Juli 2020 (2020-07-02) * Absatz [0001] * * Absatz [0007] * * Absatz [0034] * * Absatz [0036] * | 1,12 | |
| Y | THOMAS DEFARD ET AL: "PaDiM: a Patch Distribution Modeling Framework for Anomaly Detection and Localization", ARXIV.ORG, CORNELL UNIVERSITY LIBRARY, 201 OLIN LIBRARY CORNELL UNIVERSITY ITHACA, NY 14853, 17. November 2020 (2020-11-17), XP081816230, * Zusammenfassung * * Abschnitte III.B, C. * | 7 | |

**RECHERCHIERTE SACHGEBIETE (IPC)**

G06T

Der vorliegende Recherchenbericht wurde für alle Patentansprüche erstellt

| Recherchenort | Abschlußdatum der Recherche | Prüfer |
|---|---|---|
| München | 28. August 2025 | Engels, Angela |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 17 1164

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-08-2025

| Im Recherchenbericht angeführtes Patentdokument | Datum der Veröffentlichung | Mitglied(er) der Patentfamilie | Datum der Veröffentlichung |
|---|---|---|---|
| WO 2023284712 A1 | 19-01-2023 | CN 113674203 A<br>WO 2023284712 A1 | 19-11-2021<br>19-01-2023 |
| KR 102129459 B1 | 02-07-2020 | KEINE | |

EPO FORM P0461

Für nähere Einzelheiten zu diesem Anhang : siehe Amtsblatt des Europäischen Patentamts, Nr.12/82

**EP 4 636 687 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20220390387 A1
- EP 4117081 A1
- DE 102019109703 A1
- EP 3869603 A1
- WO 2023284712 A1
- EP 4166935 A1
- DE 102021002262 B3

**In der Beschreibung aufgeführte Nicht-Patentliteratur**

- Deep learning-based visual defect inspection system for pouch battery packs. **WANG, XU** ; **CHENG, PAN**. Cognitive computing - ICCC 2022: 6th international conference ; held as part of the services conference federation, SCF 2022 ; Honolulu, HI, USA, December 10-14, 2022. Springer, 2022
- **C.S. FRASER**. Digital camera self-calibration. *SPRS Journal of Photogrammetry & Remote Sensing*, 1997, vol. 52, 149-159